# EUROPEAN PATENT APPLICATION

(11) **EP 4 514 022 A1**
(43) Date of publication of application: **26.02.2025**
(21) Application number: 23795352.6
(22) Date of filing: 24.04.2023
(51) Int. Cl.: H04W 72/12

(54) **RESOURCE SCHEDULING METHOD AND COMMUNICATION APPARATUS**

(30) Priority: 28.04.2022 CN 202210456798; 15.02.2023 CN 202310151991
(71) Applicant: Huawei Technologies Co., Ltd., Shenzhen, Guangdong 518129 (CN)
(72) Inventor: HUANG, Xiuxuan, Shenzhen, Guangdong 518129 (CN); DING, Mengying, Shenzhen, Guangdong 518129 (CN); LI, Xinxian, Shenzhen, Guangdong 518129 (CN); PENG, Jinlin, Shenzhen, Guangdong 518129 (CN)
(74) Representative: Grünecker Patent- und Rechtsanwälte PartG mbB
(86) International application number: PCT/CN2023/090372
(87) International publication number: WO 2023/207919

(57) **Abstract**

This application provides a resource scheduling method and a communication apparatus. The method includes: A network device sends a plurality of pieces of configuration information to a terminal device, where the plurality of pieces of configuration information include first configuration information and second configuration information, the first configuration information is for configuring scheduling information of a multi-carrier co-scheduling manner to be sent in a first cell, and the second configuration information is for configuring a resource of a second cell to be scheduled in the multi-carrier co-scheduling manner; and the network device sends first scheduling information to the terminal device in the first cell, where the first scheduling information is for scheduling resources of a plurality of cells, and the plurality of cells include the second cell or the first cell and the second cell. **In** this way, resource utilization and resource scheduling efficiency are improved.

## Description

This application claims priorities to Chinese Patent Application No. 202210456798.5, filed with the China National Intellectual Property Administration on April 28, 2022 and entitled "RESOURCE SCHEDULING METHOD, COMMUNICATION APPARATUS, AND COMMUNICATION DEVICE", and to Chinese Patent Application No. 202310151991.2, filed with the China National Intellectual Property Administration on February 15, 2023 and entitled "RESOURCE SCHEDULING METHOD AND COMMUNICATION APPARATUS", both of which are incorporated herein by reference in their entireties.

### TECHNICAL FIELD

This application relates to the communication field, and more specifically, to a resource scheduling method and a communication apparatus.

### BACKGROUND

With continuous emergence of new services of a mobile communication system, wireless data traffic increases rapidly. To support future network capacity and transmission rate requirements, a larger transmission bandwidth is needed. Carrier aggregation (carrier aggregation, CA) is a key technology for resolving a problem that a carrier bandwidth is limited, and implements a larger transmission bandwidth in a manner of aggregating carriers of a plurality of cells.

However, in a current CA communication mode, a network device needs to send scheduling information whose quantity is directly proportional to a quantity of scheduled cells, to schedule resources of a plurality of cells at the same time. Consequently, there are problems of high overheads of control resources occupied by the scheduling information and low scheduling efficiency.

### SUMMARY

This application provides a resource scheduling method, a communication apparatus, and a communication device, to improve resource utilization and resource scheduling efficiency.

According to a first aspect, a resource scheduling method is provided. The method may be performed by a network device or a module (for example, a chip) disposed in (or used in) the network device.

The method includes: sending a plurality of pieces of configuration information to a terminal device, where the plurality of pieces of configuration information include first configuration information and second configuration information, the first configuration information is for configuring that scheduling information of a multi-carrier co-scheduling manner is sent in a first cell, and the second configuration information is for configuring that a resource of a second cell is scheduled in the multi-carrier co-scheduling manner; and sending first scheduling information to the terminal device in the first cell, where the first scheduling information is for scheduling resources of a plurality of cells, and the plurality of cells include the second cell or include the first cell and the second cell.

According to the foregoing solution, the network device notifies, by sending the configuration information, the terminal device of a cell in which the multi-carrier co-scheduling information is received and a resource of a cell that can be scheduled in the multi-carrier co-scheduling manner, so that the terminal device determines the cell in which the multi-carrier co-scheduling information is detected and the resource of the cell scheduled in the multi-carrier co-scheduling manner. Therefore, the multi-carrier co-scheduling manner in which resources of a plurality of cells are scheduled by using one piece of scheduling information is applied to communication between the network device and the terminal device, to reduce scheduling information overheads caused because the network device communicates with the terminal device by using a plurality of cell resources, and improve resource scheduling efficiency.

With reference to the first aspect, in some implementations of the first aspect, the second configuration information includes first combination identification information, the first combination identification information identifies a co-scheduled cell combination including the plurality of cells, and the first scheduling information includes the first combination identification information.

According to the foregoing solution, the network device may configure, by using the configuration information, combination identification information of a co-scheduled cell combination to which a cell belongs, and the network device may notify, in a manner of indicating one piece of combination identification information by using the multi-carrier co-scheduling information, the terminal device of a cell combination of whose resource is scheduled, so that the terminal device and the network device can reach a consensus on the cell combination whose resource is scheduled.

With reference to the first aspect, in some implementations of the first aspect, the second configuration information is configuration information of the second cell, the second configuration information includes one or more pieces of combination identification information, the one or more pieces of combination identification information are identification information of a plurality of co-scheduled cell combinations to which the second cell belongs, and the one or more pieces of combination identification information include the first combination identification information.

According to the foregoing solution, the network device may indicate, in configuration information of a cell by using combination identification information, a co-scheduled cell combination to which the cell belongs, so that the terminal device can determine, based on the combination identification information indicated by the received multi-carrier co-scheduling information, that a resource of the cell combination identified by the combination identification information is scheduled by using the scheduling information. Therefore, the multi-carrier co-scheduling manner in which resources of a plurality of cells are scheduled by using one piece of scheduling information is applied to the communication between the network device and the terminal device, to reduce the scheduling information overheads caused because the network device communicates with the terminal device by using a plurality of cell resources, and improve the resource scheduling efficiency.

With reference to the first aspect, in some implementations of the first aspect, the second configuration information is the configuration information of the second cell, and the second configuration information includes identification information of the first cell in which the first scheduling information is located.

In an example, the second configuration information does not include the identification information of the combination to which the second cell belongs, and the network device may notify, by using the configuration information of the second cell, the terminal device to detect, in the first cell, a cell in which multi-carrier co-scheduling information for scheduling the cell resource is located. The terminal device may detect, in the first cell based on the configuration information of the second cell, multi-carrier co-scheduling information for scheduling the second cell. If the terminal device obtains one piece of multi-carrier co-scheduling information through detection, the terminal device may determine that the resource of the second cell is scheduled by using the multi-carrier co-scheduling information. In this manner, the multi-carrier co-scheduling manner in which resources of a plurality of cells are scheduled by using one piece of scheduling information is applied to the communication between the network device and the terminal device. A cell in which the multi-carrier scheduling information is detected is configured, so that implementation complexity of blindly detecting the multi-carrier co-scheduling information by the terminal device in a plurality of cells can be reduced, and power consumption of the terminal device can be reduced.

In another example, the second configuration information includes both the combination identification information of the one or more co-scheduled cell combinations to which the second cell belongs and the identification information of the first cell in which multi-carrier co-scheduling information for scheduling the resource of the second cell is located. The network device may detect, in the first cell based on the configuration information of the second cell, the multi-carrier co-scheduling information for scheduling the second cell. If the terminal device obtains one piece of multi-carrier co-scheduling information through detection, and the multi-carrier co-scheduling information includes the combination identification information of the one co-scheduled cell combination to which the second cell belongs, the terminal device may determine that the resource of the second cell is scheduled by using the multi-carrier scheduling information. In this manner, implementation complexity of blindly detecting the multi-carrier co-scheduling information by the terminal device in a plurality of cells can be reduced, and power consumption of the terminal device can be reduced. In addition, the scheduled cell combination is determined based on the combination identification information, to improve resource scheduling flexibility.

With reference to the first aspect, in some implementations of the first aspect, the first configuration information is configuration information of the first cell, the first configuration information includes at least one piece of combination identification information, and each of the at least one piece of combination identification information identifies one co-scheduled cell combination to which the first cell belongs.

According to the foregoing solution, a cell carrying the multi-carrier co-scheduling information may also be scheduled in the multi-carrier co-scheduling manner. Therefore, the flexible multi-carrier co-scheduling manner is implemented, and the multi-carrier co-scheduling manner in which resources of a plurality of cells are scheduled by using one piece of scheduling information is applied to the communication between the network device and the terminal device, to reduce the scheduling information overheads caused because the network device communicates with the terminal device by using a plurality of cell resources, and improve the resource scheduling efficiency.

With reference to the first aspect, in some implementations of the first aspect, the at least one piece of combination identification information includes the first combination identification information.

According to the foregoing solution, a cell (for example, the first cell) may not only serve as the cell carrying the multi-carrier co-scheduling information, but also serve as a cell whose resource is scheduled by using the multi-carrier co-scheduling information. Therefore, the flexible multi-carrier co-scheduling manner is implemented.

With reference to the first aspect, in some implementations of the first aspect, the method further includes: sending first information to the terminal device, where the first information is for configuring the first scheduling information.

With reference to the first aspect, in some implementations of the first aspect, the sending a plurality of pieces of configuration information to a terminal device includes: sending first information to the terminal device, where the first information is for configuring the first scheduling information, and the first information includes the plurality of pieces of configuration information.

According to the foregoing solution, the network device may configure, in configuration information of the multi-carrier co-scheduling information, a cell carrying the scheduling information and a co-scheduled cell combination that can be scheduled by using the scheduling information. Therefore, the multi-carrier co-scheduling manner in which resources of a plurality of cells are scheduled by using one piece of scheduling information is applied to the communication between the network device and the terminal device, to reduce the scheduling information overheads caused because the network device communicates with the terminal device by using a plurality of cell resources, and improve the resource scheduling efficiency.

With reference to the first aspect, in some implementations of the first aspect, the second configuration information includes one or more pieces of combination identification information, the one or more pieces of combination identification information are identification information of a plurality of candidate co-scheduled cell combinations in the first scheduling information, and the one or more pieces of combination identification information include the first combination identification information.

According to the foregoing solution, the network device may configure, in the configuration information of the multi-carrier co-scheduling information, one or more candidate co-scheduled cell combinations that can be scheduled by using the multi-carrier co-scheduling information. Specifically, the terminal device may determine, based on the combination identification information indicated by the received multi-carrier co-scheduling information, the candidate co-scheduled cell combination scheduled by using the scheduling information. Therefore, the flexible multi-carrier co-scheduling manner is implemented.

With reference to the first aspect, in some implementations of the first aspect, the first information includes third configuration information, and the third configuration information is for configuring an indication field included in the first scheduling information. The third configuration information configures that the first scheduling information includes one first indication field, and the one first indication field is applicable to resources that are of the plurality of cells and that are multi-carrier co-scheduled. Alternatively, the third configuration information configures that the first scheduling information includes a plurality of first indication fields, and the plurality of first indication fields are respectively applicable to the plurality of cells that are multi-carrier co-scheduled.

According to the foregoing solution, when resources of a plurality of cells are scheduled in the multi-carrier scheduling manner, the network device may configure that an indication field in scheduling information is common or independent. Same scheduling information for the plurality of cells is indicated by using one indication field, so that information overheads of the scheduling information can be reduced, and the resource utilization can be improved.

With reference to the first aspect, in some implementations of the first aspect, the method further includes: receiving second information from the terminal device, where the second information indicates at least one frequency band in which the terminal device supports multi-carrier co-scheduling, and carriers of the plurality of cells belong to the at least one frequency band.

According to the foregoing solution, the terminal device may report, to the network device, the at least one frequency band in which the terminal device supports the multi-carrier co-scheduling, and the network device may configure, for the terminal device in the at least one frequency band, the cell whose resource is scheduled in the multi-carrier co-scheduling manner. Therefore, the network device configures the multi-carrier co-scheduling based on a capability of the terminal device, to reduce a probability that the multi-carrier co-scheduling cannot be implemented due to an improper configuration.

With reference to the first aspect, in some implementations of the first aspect, the second information further indicates that each of the at least one frequency band correspondingly supports uplink multi-carrier co-scheduling and/or supports downlink multi-carrier co-scheduling.

According to the foregoing solution, the terminal device may specifically report, to the network device, the frequency band in which the terminal device supports the uplink multi-carrier co-scheduling and/or the downlink multi-carrier co-scheduling, so that the network device obtains more detailed capability information of the terminal device, to implementing a more proper configuration.

With reference to the first aspect, in some implementations of the first aspect, the method further includes: sending second scheduling information to the terminal device in the first cell, where the second scheduling information is for scheduling a resource of at least one cell. The first scheduling information is downlink scheduling information, and the second scheduling information is downlink scheduling information. Alternatively, the first scheduling information is downlink scheduling information, and the second scheduling information is uplink scheduling information. An information length of the first scheduling information is equal to an information length of the second scheduling information.

According to the foregoing solution, a length of uplink multi-carrier co-scheduling information is equal to a length of downlink multi-carrier co-scheduling information, so that an increase in a type of a length of the scheduling information blindly detected by the terminal device can be avoided, and a quantity of times for which the terminal device performs blind detection can be reduced. Therefore, the power consumption of the terminal device is reduced.

With reference to the first aspect, in some implementations of the first aspect, the method further includes: sending second scheduling information to the terminal device in a third cell, where the second scheduling information is for scheduling a resource of at least one cell. The first scheduling information is uplink scheduling information, and the second scheduling information is downlink scheduling information. Alternatively, the first scheduling information is downlink scheduling information, and the second scheduling information is uplink scheduling information. The third cell is a cell other than the plurality of cells.

According to the foregoing solution, to improve resource utilization of a control resource, it may be stipulated that a resource of a cell other than a primary cell cannot carry scheduling information for scheduling a resource of another cell in a cross-carrier manner, and be scheduled by using scheduling information on another carrier at the same time, where the control resource is for carrying the scheduling information. Therefore, it may be stipulated that at least one of the uplink multi-carrier scheduling information and the downlink multi-carrier scheduling information is not sent in a cell belonging to the co-scheduled cell combination. For example, the first cell may be the primary cell, and the third cell does not belong to the co-scheduled cell combination.

According to a second aspect, a resource scheduling method is provided. The method may be performed by a terminal device or a module (for example, a chip) disposed in (or used in) the terminal device. For beneficial effects of the resource scheduling method provided in the second aspect, refer to the descriptions in the first aspect. Details are not described herein again.

The method includes: receiving a plurality of pieces of configuration information from a network device, where the plurality of pieces of configuration information include first configuration information and second configuration information, the first configuration information is for configuring scheduling information of a multi-carrier co-scheduling manner to be sent in a first cell, and the second configuration information is for configuring a resource of a second cell to be scheduled in the multi-carrier co-scheduling manner; and receiving first scheduling information from the network device in the first cell, where the first scheduling information is for scheduling resources of a plurality of cells, and the plurality of cells include the second cell or include the first cell and the second cell.

With reference to the second aspect, in some implementations of the second aspect, the second configuration information includes first combination identification information, the first combination identification information identifies a co-scheduled cell combination including the plurality of cells, and the first scheduling information includes the first combination identification information.

With reference to the second aspect, in some implementations of the second aspect, the second configuration information is configuration information of the second cell, the second configuration information includes one or more pieces of combination identification information, the one or more pieces of combination identification information are identification information of a plurality of co-scheduled cell combinations to which the second cell belongs, and the one or more pieces of combination identification information include the first combination identification information.

With reference to the second aspect, in some implementations of the second aspect, the second configuration information is the configuration information of the second cell, and the second configuration information includes identification information of the first cell in which the first scheduling information is located.

With reference to the second aspect, in some implementations of the second aspect, the first configuration information is configuration information of the first cell, the first configuration information includes at least one piece of combination identification information, and each of the at least one piece of combination identification information identifies one co-scheduled cell combination to which the first cell belongs.

With reference to the second aspect, in some implementations of the second aspect, the at least one piece of combination identification information includes the first combination identification information.

With reference to the second aspect, in some implementations of the second aspect, the method further includes: receiving first information from the network device, where the first information is for configuring the first scheduling information.

With reference to the second aspect, in some implementations of the second aspect, receiving the plurality of pieces of configuration information sent by the network device includes: receiving first information from the network device, where the first information is for configuring the first scheduling information, and the first information includes the plurality of pieces of configuration information.

With reference to the second aspect, in some implementations of the second aspect, the second configuration information includes one or more pieces of combination identification information, the one or more pieces of combination identification information are identification information of a plurality of candidate co-scheduled cell combinations in the first scheduling information, and the one or more pieces of combination identification information include the first combination identification information.

With reference to the second aspect, in some implementations of the second aspect, the first information includes third configuration information, and the third configuration information is for configuring an indication field included in the first scheduling information. The third configuration information configures that the first scheduling information includes one first indication field, and the one first indication field is applicable to resources that are of the plurality of cells and that are multi-carrier co-scheduled. Alternatively, the third configuration information configures that the first scheduling information includes a plurality of first indication fields, and the plurality of first indication fields are respectively applicable to the plurality of cells that are multi-carrier co-scheduled.

With reference to the second aspect, in some implementations of the second aspect, the method further includes: sending second information to the network device, where the second information indicates at least one frequency band in which a terminal device supports multi-carrier co-scheduling, and carriers of the plurality of cells belong to the at least one frequency band.

With reference to the second aspect, in some implementations of the second aspect, the second information indicates the at least one frequency band in which the terminal device supports the multi-carrier co-scheduling, and carriers of the first cell and the second cell are in the at least one frequency band.

With reference to the second aspect, in some implementations of the second aspect, the second information further indicates that each of the at least one frequency band correspondingly supports uplink multi-carrier co-scheduling and/or supports downlink multi-carrier co-scheduling.

With reference to the second aspect, in some implementations of the second aspect, the method further includes: receiving second scheduling information from the network device in the first cell, where the second scheduling information is for scheduling a resource of at least one cell. The first scheduling information is downlink scheduling information, and the second scheduling information is downlink scheduling information. Alternatively, the first scheduling information is downlink scheduling information, and the second scheduling information is uplink scheduling information. An information length of the first scheduling information is equal to an information length of the second scheduling information.

With reference to the second aspect, in some implementations of the second aspect, the method further includes: receiving second scheduling information from the network device in a third cell, where the second scheduling information is for scheduling a resource of at least one cell. The first scheduling information is uplink scheduling information, and the second scheduling information is downlink scheduling information. Alternatively, the first scheduling information is downlink scheduling information, and the second scheduling information is uplink scheduling information. The third cell is a cell other than the plurality of cells.

According to a third aspect, a communication apparatus is provided. In a design, the apparatus may include modules that are in one-to-one correspondence with the method/operations/steps/actions described in the first aspect. The modules may be hardware circuits or software, or may be implemented by a combination of the hardware circuits and the software. In a design, the apparatus includes: a processing unit, configured to determine a plurality of pieces of configuration information, where the plurality of pieces of configuration information include first configuration information and second configuration information, the first configuration information is for configuring scheduling information of a multi-carrier co-scheduling manner to be sent in a first cell, and the second configuration information is for configuring a resource of a second cell to be scheduled in the multi-carrier co-scheduling manner; and a transceiver unit, configured to send the plurality of pieces of configuration information to a terminal device. The transceiver unit is further configured to send first scheduling information to the terminal device in the first cell, where the first scheduling information is for scheduling resources of a plurality of cells, and the plurality of cells include the second cell or include the first cell and the second cell.

With reference to the third aspect, in some implementations of the third aspect, the second configuration information includes first combination identification information, the first combination identification information identifies a co-scheduled cell combination including the plurality of cells, and the first scheduling information includes the first combination identification information.

With reference to the third aspect, in some implementations of the third aspect, the second configuration information is configuration information of the second cell, the second configuration information includes one or more pieces of combination identification information, the one or more pieces of combination identification information are identification information of a plurality of co-scheduled cell combinations to which the second cell belongs, and the one or more pieces of combination identification information include the first combination identification information.

With reference to the third aspect, in some implementations of the third aspect, the second configuration information is the configuration information of the second cell, and the second configuration information includes identification information of the first cell in which the first scheduling information is located.

With reference to the third aspect, in some implementations of the third aspect, the first configuration information is configuration information of the first cell, the first configuration information includes at least one piece of combination identification information, and each of the at least one piece of combination identification information identifies one co-scheduled cell combination to which the first cell belongs.

With reference to the third aspect, in some implementations of the third aspect, the at least one piece of combination identification information includes the first combination identification information.

With reference to the third aspect, in some implementations of the third aspect, the transceiver unit is further configured to send first information to the terminal device, where the first information is for configuring the first scheduling information.

With reference to the third aspect, in some implementations of the third aspect, the transceiver unit is specifically configured to send first information to the terminal device, where the first information is for configuring the first scheduling information, and the first information includes the plurality of pieces of configuration information.

With reference to the third aspect, in some implementations of the third aspect, the second configuration information includes one or more pieces of combination identification information, the one or more pieces of combination identification information are identification information of a plurality of candidate co-scheduled cell combinations in the first scheduling information, and the one or more pieces of combination identification information include the first combination identification information.

With reference to the third aspect, in some implementations of the third aspect, the first information includes third configuration information, and the third configuration information is for configuring an indication field included in the first scheduling information. The third configuration information configures that the first scheduling information includes one first indication field, and the one first indication field is applicable to resources that are of the plurality of cells and that are multi-carrier co-scheduled. Alternatively, the third configuration information configures that the first scheduling information includes a plurality of first indication fields, and the plurality of first indication fields are respectively applicable to the plurality of cells that are multi-carrier co-scheduled.

With reference to the third aspect, in some implementations of the third aspect, the transceiver unit is further configured to receive second information from the terminal device, where the second information indicates at least one frequency band in which the terminal device supports multi-carrier co-scheduling, and carriers of the plurality of cells belong to the at least one frequency band.

With reference to the third aspect, in some implementations of the third aspect, the second information indicates the at least one frequency band in which the terminal device supports the multi-carrier co-scheduling, and carriers of the first cell and the second cell are in the at least one frequency band.

With reference to the third aspect, in some implementations of the third aspect, the second information further indicates that each of the at least one frequency band correspondingly supports uplink multi-carrier co-scheduling and/or supports downlink multi-carrier co-scheduling.

With reference to the third aspect, in some implementations of the third aspect, the transceiver unit is further configured to send second scheduling information to the terminal device in the first cell, where the second scheduling information is for scheduling a resource of at least one cell. The first scheduling information is downlink scheduling information, and the second scheduling information is downlink scheduling information. Alternatively, the first scheduling information is downlink scheduling information, and the second scheduling information is uplink scheduling information. An information length of the first scheduling information is equal to an information length of the second scheduling information.

With reference to the third aspect, in some implementations of the third aspect, the transceiver unit is further configured to send second scheduling information to the terminal device in a third cell, where the second scheduling information is for scheduling a resource of at least one cell. The first scheduling information is uplink scheduling information, and the second scheduling information is downlink scheduling information. Alternatively, the first scheduling information is downlink scheduling information, and the second scheduling information is uplink scheduling information. The third cell is a cell other than the plurality of cells.

According to a fourth aspect, a communication apparatus is provided. In a design, the apparatus may include modules that are in one-to-one correspondence with the method/operations/steps/actions described in the second aspect. The modules may be hardware circuits or software, or may be implemented by a combination of the hardware circuits and the software. In a design, the apparatus includes: a transceiver unit, configured to receive a plurality of pieces of configuration information from a network device, where the plurality of pieces of configuration information include first configuration information and second configuration information, the first configuration information is for configuring scheduling information of a multi-carrier co-scheduling manner to be sent in a first cell, and the second configuration information is for configuring a resource of a second cell to be scheduled in the multi-carrier co-scheduling manner; and a processing unit, configured to: determine, based on the first configuration information, that the scheduling information of the multi-carrier co-scheduling manner is sent in the first cell, and determine, based on the second configuration information, that the resource of the second cell is scheduled in the multi-carrier co-scheduling manner. The transceiver unit is further configured to receive first scheduling information from the network device in the first cell, where the first scheduling information is for scheduling resources of a plurality of cells, and the plurality of cells include the second cell or include the first cell and the second cell.

With reference to the fourth aspect, in some implementations of the fourth aspect, the second configuration information includes first combination identification information, the first combination identification information identifies a co-scheduled cell combination including the plurality of cells, and the first scheduling information includes the first combination identification information.

With reference to the fourth aspect, in some implementations of the fourth aspect, the second configuration information is configuration information of the second cell, the second configuration information includes one or more pieces of combination identification information, the one or more pieces of combination identification information are identification information of a plurality of co-scheduled cell combinations to which the second cell belongs, and the one or more pieces of combination identification information include the first combination identification information.

With reference to the fourth aspect, in some implementations of the fourth aspect, the second configuration information is the configuration information of the second cell, and the second configuration information includes identification information of the first cell in which the first scheduling information is located.

With reference to the fourth aspect, in some implementations of the fourth aspect, the first configuration information is configuration information of the first cell, the first configuration information includes at least one piece of combination identification information, and each of the at least one piece of combination identification information identifies one co-scheduled cell combination to which the first cell belongs.

With reference to the fourth aspect, in some implementations of the fourth aspect, the at least one piece of combination identification information includes the first combination identification information.

With reference to the fourth aspect, in some implementations of the fourth aspect, the transceiver unit is further configured to receive first information from the network device, where the first information is for configuring the first scheduling information.

With reference to the fourth aspect, in some implementations of the fourth aspect, the transceiver unit is specifically configured to receive first information from the network device, where the first information is for configuring the first scheduling information, and the first information includes the plurality of pieces of configuration information.

With reference to the fourth aspect, in some implementations of the fourth aspect, the second configuration information includes one or more pieces of combination identification information, the one or more pieces of combination identification information are identification information of a plurality of candidate co-scheduled cell combinations in the first scheduling information, and the one or more pieces of combination identification information include the first combination identification information.

With reference to the fourth aspect, in some implementations of the fourth aspect, the first information includes third configuration information, and the third configuration information is for configuring an indication field included in the first scheduling information. The third configuration information configures that the first scheduling information includes one first indication field, and the one first indication field is applicable to resources that are of the plurality of cells and that are multi-carrier co-scheduled. Alternatively, the third configuration information configures that the first scheduling information includes a plurality of first indication fields, and the plurality of first indication fields are respectively applicable to the plurality of cells that are multi-carrier co-scheduled.

With reference to the fourth aspect, in some implementations of the fourth aspect, the transceiver unit is further configured to send second information to the network device, where the second information indicates at least one frequency band in which a terminal device supports multi-carrier co-scheduling, and carriers of the plurality of cells belong to the at least one frequency band.

With reference to the fourth aspect, in some implementations of the fourth aspect, the second information indicates the at least one frequency band in which the terminal device supports the multi-carrier co-scheduling, and carriers of the first cell and the second cell are in the at least one frequency band.

With reference to the fourth aspect, in some implementations of the fourth aspect, the second information further indicates that each of the at least one frequency band correspondingly supports uplink multi-carrier co-scheduling and/or supports downlink multi-carrier co-scheduling.

With reference to the fourth aspect, in some implementations of the fourth aspect, the transceiver unit is further configured to receive second scheduling information from the network device in the first cell, where the second scheduling information is for scheduling a resource of at least one cell. The first scheduling information is downlink scheduling information, and the second scheduling information is downlink scheduling information. Alternatively, the first scheduling information is downlink scheduling information, and the second scheduling information is uplink scheduling information. An information length of the first scheduling information is equal to an information length of the second scheduling information.

With reference to the fourth aspect, in some implementations of the fourth aspect, the transceiver unit is further configured to receive second scheduling information from the network device in a third cell, where the second scheduling information is for scheduling a resource of at least one cell. The first scheduling information is uplink scheduling information, and the second scheduling information is downlink scheduling information. Alternatively, the first scheduling information is downlink scheduling information, and the second scheduling information is uplink scheduling information. The third cell is a cell other than the plurality of cells.

According to a fifth aspect, a communication apparatus is provided, including a processor. The processor may implement the method in any one of the first aspect and the possible implementations of the first aspect. Optionally, the communication apparatus further includes a memory. The processor is coupled to the memory, and may be configured to execute instructions in the memory, to implement the method in any one of the first aspect and the possible implementations of the first aspect. Optionally, the communication apparatus further includes a communication interface, and the processor is coupled to the communication interface. In this disclosure, the communication interface may be a transceiver, a pin, a circuit, a bus, a module, or a communication interface of another type. However, this application is not limited thereto.

According to the communication apparatus provided in the fifth aspect, in an implementation, when the communication apparatus is a network device, the communication interface may be a transceiver. Optionally, the transceiver may be a transceiver circuit. In another implementation, when the communication apparatus is a chip disposed in the network device, the communication interface may be an input/output interface.

According to a sixth aspect, a communication apparatus is provided, including a processor. The processor may implement the method in any one of the second aspect and the possible implementations of the second aspect. Optionally, the communication apparatus further includes a memory. The processor is coupled to the memory, and may be configured to execute instructions in the memory, to implement the method in any one of the second aspect and the possible implementations of the second aspect. Optionally, the communication apparatus further includes a communication interface, and the processor is coupled to the communication interface.

According to the communication apparatus provided in the sixth aspect, in an implementation, when the communication apparatus is a terminal device, the communication interface may be a transceiver. Optionally, the transceiver may be a transceiver circuit. In another implementation, when the communication apparatus is a chip disposed in the terminal device, the communication interface may be an input/output interface.

Optionally, the input/output interface may include an input circuit and an output circuit. During specific implementation, the input circuit may be an input pin, the output circuit may be an output pin, and the processor may be a transistor, a gate circuit, a trigger, any logic circuit, or the like. An input signal received by the input circuit may be, for example, but not limited to, received and input by a receiver, and a signal output by the output circuit may be, for example, but not limited to, output to a transmitter and transmitted by the transmitter. The input circuit and the output circuit may be a same circuit, and the circuit is used as the input circuit and the output circuit at different moments. Specific implementations of the processor and the various circuits are not limited in this disclosure.

According to a seventh aspect, a computer program product is provided. The computer program product includes a computer program (which may also be referred to as code or instructions). When the computer program is run, a computer is enabled to perform the method in any one of the first aspect and the possible implementations of the first aspect, or a computer is enabled to perform the method in any one of the second aspect and the possible implementations of the second aspect.

According to an eighth aspect, a computer-readable storage medium is provided. The computer-readable storage medium stores a computer program (which may also be referred to as code or instructions). When the computer program is run on a computer, a computer is enabled to perform the method in any one of the first aspect and the possible implementations of the first aspect, or a computer is enabled to perform the method in any one of the second aspect and the possible implementations of the second aspect.

According to a ninth aspect, a communication system is provided, including the communication apparatus provided in the third aspect and/or the fifth aspect and the communication apparatus provided in the fourth aspect and/or the sixth aspect.

### BRIEF DESCRIPTION OF DRAWINGS

FIG. 1 is a diagram of a communication system according to an embodiment of this application;
FIG. 2 is a diagram of a self-carrier scheduling manner according to an embodiment of this application;
FIG. 3 is a diagram of a cross-carrier scheduling manner according to an embodiment of this application;
FIG. 4 is a diagram of a multi-carrier scheduling manner according to an embodiment of this application;
FIG. 5 is a schematic flowchart of a resource scheduling method according to an embodiment of this application;
FIG. 6 is a block diagram of an example of a communication apparatus according to an embodiment of this application;
FIG. 7 is a diagram of a structure of an example of a terminal device according to an embodiment of this application; and
FIG. 8 is a diagram of a structure of an example of a network device according to an embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5^{th} generation (5^{th} generation, 5G) communication system such as a 5G new radio (new radio, NR) system, a future communication system (such as a 6^{th} generation (6^{th} generation, 6G) communication system), a system integrating a plurality of communication systems, or the like. This is not limited in embodiments of this application.

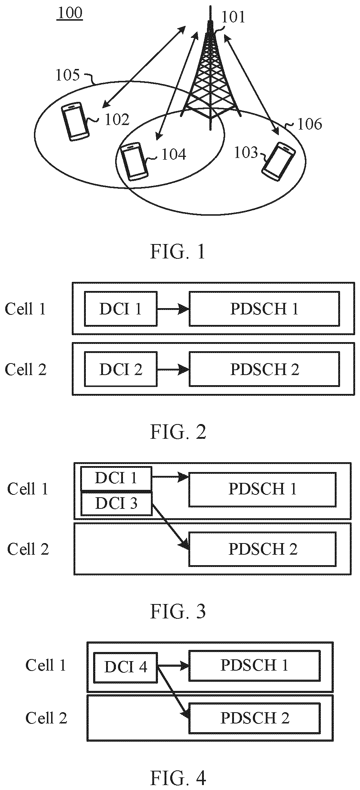

FIG. 1 is a diagram of a communication system 100 applicable to an embodiment of this application. The communication system 100 may include at least one network device, for example, a network device 101 shown in FIG. 1. The communication system 100 may further include at least one terminal device, for example, a terminal device 102, a terminal device 103, and a terminal device 104 shown in FIG. 1. The network device 101 may separately communicate with the terminal device 102, the terminal device 103, and the terminal device 104 by using a radio resource, to provide a network service for the terminal device. The network device 101 may manage one or more cells, such as a cell 105 and a cell 106 shown in FIG. 1. Different cells have different coverage areas and/or frequency domain resources (such as carriers or carrier frequency bands). The network device 101 may communicate with the terminal device 102 by using a radio transmission resource of the cell 105, and communicate with the terminal device 103 in the cell 106 by using a transmission resource of the cell 106. In addition, the network device may further communicate with the terminal device in a carrier aggregation manner. For example, the terminal device 104 is located in the coverage areas of the cell 105 and the cell 106, and the network device 101 may communicate with the terminal device 104 in a carrier aggregation (carrier aggregation, CA) manner of the cell 105 and the cell 106. It should be noted that FIG. 1 is merely an example of a communication system applicable to this embodiment of this application, and this application is not limited thereto. The coverage areas of the two cells shown in FIG. 1 partially overlap, and the coverage areas of the two cells may alternatively be that a coverage area of one cell may include a coverage area of the other cell.

The terminal device in embodiments of this application may also be referred to as a terminal. The terminal may be a device having a wireless transceiver function. The terminal may be deployed on land, including being deployed indoor, outdoor, handheld, and/or vehicle-mounted, may be deployed on a water surface (for example, on a ship), or may be deployed in air (for example, on an airplane, a balloon, or a satellite). The terminal device may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), and/or the like.

The network device in embodiments of this application includes a base station (base station, BS), and may be a device that is deployed in a radio access network and that can perform wireless communication with the terminal device. The base station may be in a plurality of forms, for example, a macro base station, a micro base station, a relay station, or an access point. The base station in embodiments of this application may be a base station in a 5G system, a base station in an LTE system, or a base station in another system. This is not limited. The base station in the 5G system may also be referred to as a transmission reception point (transmission reception point, TRP) or a next generation NodeB (generation NodeB, gNB or gNodeB). The base station may be an integrated base station, or may be a base station separated into a plurality of network elements. This is not limited. For example, the base station is a base station in which a central unit (central unit, CU) and a distributed unit (distributed unit, DU) are separated. That is, the base station includes the CU and the DU.

In embodiments of this application, "/" may indicate an "or" relationship between associated objects, for example, A/B may indicate A or B; and "and/or" may indicate that three relationships exist between the associated objects, for example, A and/or B may indicate the following three cases: A exists alone, both A and B exist, and B exists alone, where A and B may be singular or plural. For ease of describing the technical solutions in embodiments of this application, in embodiments of this application, terms such as "first" and "second" may be used to distinguish between technical features with a same or similar function. The terms such as "first" and "second" do not limit a quantity and an execution sequence, and the terms such as "first" and "second" do not indicate a definite difference. In embodiments of this application, a word such as "example" or "for example" is used to indicate an example, an illustration, or a description. Any embodiment or design solution described as "example" or "for example" should not be explained as being more preferred or having more advantages than another embodiment or design solution. The word such as "example" or "for example" is used to present a related concept in a specific manner for ease of understanding.

In embodiments of this application, "at least one (type)" may alternatively be described as "one (type) or more (types)", and "a plurality of (types)" may be two (types), three (types), four (types), or more (types). This is not limited in this application.

To better understand embodiments of this application, the following briefly describes technologies and terms used in this specification.

### 1. Cell and carrier

The cell may be understood as a coverage area of a radio signal identified by a network device identifier or a cell global identifier. From a perspective of resource management, the cell is a unit that manages a wireless communication resource. A physical layer resource of the cell includes at least one carrier. From a perspective of a physical layer, the carrier is a bearer for carrying a radio signal. The radio signal may include one or more of a control information signal, a service data signal, and a reference signal. The carrier occupies a specific frequency domain resource, and is represented by a carrier frequency and a bandwidth of a carrier frequency band. One cell includes at least one carrier, the at least one carrier includes one downlink carrier, and the downlink carrier is for carrying a radio signal sent by a network device to a terminal. The at least one carrier of the one cell may further include one or more uplink carriers, and the uplink carrier is for carrying a radio signal sent by the terminal to the network device. According to different duplex manners, for example, a downlink carrier and an uplink carrier of one cell may be different when the cell uses a frequency division duplex (frequency division duplex, FDD) manner. A downlink carrier and an uplink carrier of one cell may be the same when the cell uses a time division duplex (time division duplex, TDD) manner.

Carriers of one cell used as frequency domain resources and time resources forms time-frequency resources of the cell. Alternatively, it may be understood as that the carriers form the time-frequency resources as time elapses. Communication signals (including control information, a reference signal, data, and the like) between the network device and the terminal device in the cell are carried on the time-frequency resources of the cell. Specifically, a downlink carrier and a time resource form a downlink time-frequency resource of the cell, and an uplink carrier and a time resource form an uplink time-frequency resource of the cell.

In this application, a resource of one cell is a time-frequency resource within a bandwidth range of a carrier frequency band of the cell, and that a communication signal is carried on a carrier of one cell means that the communication signal is transmitted or received in a carrier frequency band of the cell, in other words, the communication signal is carried on a time-frequency resource of the cell.

### 2. Carrier aggregation

In a non-carrier aggregation scenario, a terminal device may establish a communication connection to one cell, and the cell provides a network service for the terminal device. The cell may be referred to as a serving cell (serving cell) of the terminal device.

In a carrier aggregation (CA) scenario, a terminal device may establish communication connections to a plurality of cells. The plurality of cells serve as serving cells of the terminal device to provide a communication service for the terminal device. Carrier frequencies of the plurality of cells are different, and carrier frequency bands do not overlap. This increases a communication bandwidth between the network device and the terminal device, and can improve a data transmission rate. A cell initially accessed by the terminal device is referred to as a primary cell (primary cell, PCell), and is used by the terminal device to establish a radio resource control (radio resource control, RRC) connection to a network. The network may configure a secondary cell (secondary cell, SCell) for the terminal device based on a transmission requirement of the terminal device, to provide more uplink transmission resources and/or downlink transmission resources for the terminal device. The secondary cell may be configured by using RRC signaling of the primary cell, and activation or deactivation of the secondary cell may be implemented by using a media access control (media access control, MAC) control element (control element, CE) or downlink control information (downlink control information, DCI).

Currently, in the CA scenario, if an access network device needs to schedule resources (for example, physical downlink shared channels (physical downlink shared channels, PDSCHs) or physical uplink shared channels (physical uplink shared channels, PUSCHs)) of a plurality of cells at the same time to communicate with the terminal device, the access network device needs to send a plurality of pieces of downlink control information (downlink control information, DCI) for scheduling, where one piece of DCI is for scheduling a resource of one cell. A self-carrier scheduling manner and a cross-carrier scheduling manner are obtained through classification depending on whether DCI for scheduling a resource of one cell is carried on a carrier of the cell.

The self-carrier scheduling manner means sending DCI for scheduling a resource (a PDSCH or a PUSCH) of one cell in the cell. In other words, a resource carrying the DCI and the resource scheduled by using the DCI belong to a same cell. As shown in FIG. 2, one terminal device includes two serving cells: a cell 1 and a cell 2. For each of the two serving cells of the terminal device, the network device may use the self-carrier scheduling manner. For example, the network device sends DCI 1 on a resource (for example, a physical downlink control channel (physical downlink control channel, PDCCH)) of the cell 1, where the DCI 1 is for scheduling a PDSCH 1 of the cell 1. The network device sends DCI 2 on a resource of the cell 2, where the DCI 2 is for scheduling a PDSCH 2 of the cell 2. The network device may schedule, by using the DCI 1 and the DCI 2, the PDSCH 1 and the PDSCH 2 that overlap in terms of time, so that a data transmission rate of the terminal device can be improved.

The cross-carrier scheduling manner means sending, in a cell, DCI for scheduling a resource of another cell. In other words, a resource carrying the DCI and the resource scheduled by using the DCI do not belong to a same cell. As shown in FIG. 3, the network device may schedule a resource of a cell 2 in the cross-carrier scheduling manner. For example, the network device sends DCI 3 in a cell 1, where the DCI 3 is for scheduling a PDSCH 2 of the cell 2. The network device may further send, in the cell 1, DCI 1 for scheduling a PDSCH 1 of the cell 1. The PDSCH 1 and the PDSCH 2 overlap in terms of time, so that a data transmission rate of the terminal device can be improved.

As described above, when the network device needs to schedule resources of a plurality of cells at the same time to improve a data transmission rate, the network device needs to send scheduling information whose quantity is directly proportional to a quantity of scheduled cells, to schedule the resources of the plurality of cells at the same time. Control resource overheads occupied by the scheduling information are high, and scheduling efficiency is low. For the problems, this application provides that resources of a plurality of cells may be scheduled by using one piece of scheduling information. For example, as shown in FIG. 4, one piece of scheduling information, such as DCI 4, is sent in one cell 1, and the DCI 4 may be for scheduling a PDSCH 1 of the cell 1 and a PDSCH 2 of a cell 2 at the same time.

To schedule resources of a plurality of cells by using one piece of scheduling information, this application provides a resource scheduling method. A network device may configure, for a terminal device by using configuration information, a cell in which one piece of scheduling information for scheduling a plurality of carriers (referred to as multi-carrier co-scheduling information) is sent and a cell whose resource can be scheduled by using the multi-carrier co-scheduling information, so that the terminal device can determine, based on the configuration information, to detect a cell of the multi-carrier scheduling information and a plurality of cells whose resources are scheduled. Therefore, a scheduling manner in which resources of a plurality of cells are scheduled by using one piece of scheduling information can be implemented, to improve resource utilization and scheduling efficiency.

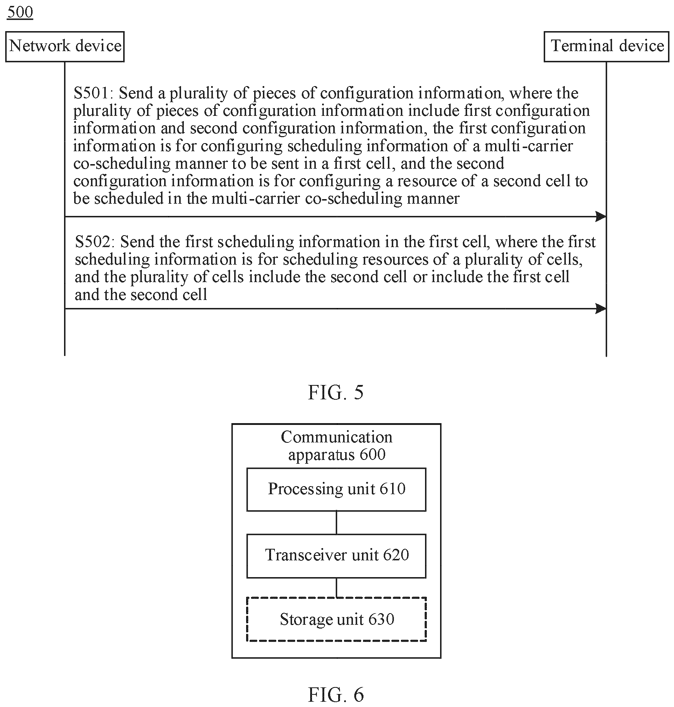

FIG. 5 is a schematic flowchart of a resource scheduling method 500 according to an embodiment of this application.

S501: A network device sends a plurality of pieces of configuration information to a terminal device, where the plurality of pieces of configuration information include first configuration information and second configuration information, the first configuration information is for configuring scheduling information of a multi-carrier co-scheduling manner to be sent in a first cell, and the second configuration information is for configuring a resource of a second cell to be scheduled in the multi-carrier co-scheduling manner.

Correspondingly, the terminal device receives the plurality of pieces of configuration information from the network device.

In this application, the multi-carrier co-scheduling manner is a scheduling manner in which one piece of scheduling information indicates to schedule resources of a plurality of cells, and the resources of the plurality of cells are for carrying communication signals (including a reference signal and/or data). For example, the network device may schedule resources on uplink carriers of a plurality of cells by using one piece of scheduling information, or may schedule resources on downlink carriers of a plurality of cells by using one piece of scheduling information. The scheduling information of the multi-carrier co-scheduling manner may be referred to as multi-carrier co-scheduling information.

When the network device needs to schedule resources of a plurality of cells in the multi-carrier co-scheduling manner to communicate with the terminal device, the network device may send the plurality of pieces of configuration information to the terminal device. The network device notifies, by using the first configuration information in the plurality of pieces of configuration information, the terminal device that the scheduling information of the multi-carrier co-scheduling manner is sent in the first cell. The scheduling information of the multi-carrier co-scheduling manner is for scheduling the resources of the plurality of cells. A resource of one cell in the resources of the plurality of cells may be a data channel resource (for example, a PDSCH or a PUSCH) for carrying data, or a reference signal resource for carrying a reference signal.

The plurality of pieces of configuration information further include the second configuration information. The network device notifies, by using the second configuration information, the terminal device that the resource of the second cell can be scheduled in the multi-carrier co-scheduling manner.

The network device notifies, by sending the configuration information, the terminal device of a cell in which the multi-carrier co-scheduling information is received and the resource of the cell that can be scheduled in the multi-carrier co-scheduling manner, so that the terminal device determines the cell in which the multi-carrier co-scheduling information is detected and the resource of the cell scheduled in the multi-carrier co-scheduling manner. Therefore, the multi-carrier co-scheduling manner in which resources of a plurality of cells are scheduled by using one piece of scheduling information is applied to communication between the network device and the terminal device, to reduce scheduling information overheads caused because the network device communicates with the terminal device by using a plurality of cell resources.

Optionally, the plurality of pieces of configuration information is carried in an RRC message. The plurality of pieces of configuration information may be carried in a same RRC message, or the plurality of pieces of configuration information may be carried in different RRC messages.

A manner in which the network device sends the plurality of pieces of configuration information to the terminal device includes but is not limited to the following implementations.

Implementation 1: The plurality of pieces of configuration information sent by the network device to the terminal device are configuration information of a plurality of cells, the first configuration information is configuration information of the first cell, and the second configuration information is configuration information of the second cell.

The configuration information of the cell may also be referred to as configuration information of a serving cell, and configuration information of one serving cell is for configuring one serving cell of the terminal device. In this implementation, the network device notifies, by using the configuration information of the serving cell, the terminal device of whether the multi-carrier co-scheduling information is sent in the cell and/or whether a resource of the cell can be scheduled in the multi-carrier co-scheduling manner.

Optionally, the configuration information of the serving cell includes one piece of optional configuration information, denoted as information A. The information A is for configuring the multi-carrier co-scheduling manner. If configuration information of one serving cell includes the information A, the terminal device may determine that the serving cell participates in multi-carrier co-scheduling. If configuration information of one serving cell does not include the information A, the terminal device may determine that the serving cell does not participate in multi-carrier co-scheduling. However, this application is not limited thereto. Configuration information of each serving cell includes one piece of indication information indicating that the serving cell participates in or does not participate in the multi-carrier co-scheduling.

For example, the configuration information of the serving cell may be denoted as "ServingCellConfig", the information A may be referred to as multi-carrier scheduling configuration information, and is denoted as "multiCarrierSchedulingConfig". The configuration information of the serving cell may be represented as follows.

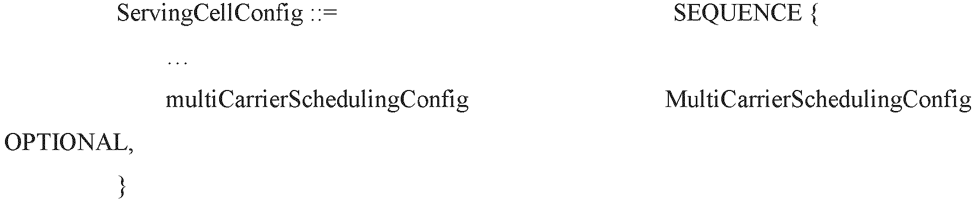

"OPTIONAL" indicates that the information A is an optional configuration, and "MultiCarrierSchedulingConfig" includes the configuration information of the multi-carrier co-scheduling manner. In addition, "..." in the configuration information of the serving cell (ServingCellConfig) indicates that the configuration information of the serving cell may further include other information. This is not limited in this application.

For example, the configuration information of the first cell (that is, the first configuration information) includes information A₁ for configuring the multi-carrier co-scheduling manner, where the information A₁ indicates that the first cell is a scheduling cell. In other words, the multi-carrier co-scheduling information is carried on a resource of the first cell (for example, a PDCCH of the first cell). The configuration information of the second cell (that is, the second configuration information) includes information A₂ for configuring the multi-carrier co-scheduling manner, where the information A₂ indicates that the second cell is a cell scheduled in the multi-carrier co-scheduling manner. In other words, the resource of the second cell may be scheduled in the multi-carrier co-scheduling manner.

It should be noted that, to better understand the solutions provided in this embodiment of this application, some characters (for example, ServingCellConfig in the foregoing descriptions represents the configuration information of the serving cell) are used as examples for description. It should be understood that, during specific implementation, a corresponding function may be implemented in another representation manner. This is not limited in this application.

Optionally, the configuration information of the first cell further indicates whether the resource of the first cell is scheduled in the multi-carrier co-scheduling manner.

For example, the configuration information of the first cell indicates that the resource of the first cell is scheduled in the multi-carrier co-scheduling manner. In an example, information A in the configuration information of the first cell further indicates that the resource of the first cell is scheduled in the multi-carrier co-scheduling manner. In this case, the resource of the first cell carries the multi-carrier co-scheduling information, and may be scheduled in the multi-carrier co-scheduling manner. The network device may send one piece of scheduling information in the first cell, where the resource of the first cell and the resource of the second cell may be scheduled by using the scheduling information. The scheduling information may be uplink scheduling information, and is for scheduling a PUSCH of the first cell and a PUSCH of the second cell to transmit uplink data. After receiving the uplink scheduling information, the terminal device sends the uplink data on the PUSCH of the first cell and the PUSCH of the second cell that are scheduled by using the uplink scheduling information. Alternatively, the scheduling information may be downlink scheduling information, and is for scheduling a PDSCH of the first cell and a PDSCH of the second cell to transmit downlink data. After receiving the downlink scheduling information, the terminal device receives the downlink data on the PDSCH of the first cell and the PDSCH of the second cell that are scheduled by using the downlink scheduling information. Alternatively, the resource of the first cell may be scheduled by using multi-carrier co-scheduling information carried in a resource of a cell (for example, a third cell) other than the first cell, and configuration information of the third cell also indicates to send the multi-carrier co-scheduling information in the third cell.

For another example, the configuration information of the first cell indicates that the resource of the first cell is not scheduled in the multi-carrier co-scheduling manner. The network device may send one piece of scheduling information in the first cell, where resources of a plurality of cells other than the first cell may be scheduled by using the scheduling information. For example, the plurality of cells include the second cell.

Optionally, the configuration information of the second cell includes first combination identification information, the first combination identification information identifies a co-scheduled cell combination to which the second cell belongs, and one co-scheduled cell combination includes a plurality of cells.

When the network device schedules resources of the plurality of cells identified by the first combination identification information, scheduling information sent by the network device includes the first combination identification information. After receiving the scheduling information, the terminal device determines that the resources of the co-scheduled cell combination identified by the first combination identification information are scheduled.

Optionally, the configuration information of the second cell includes identification information of the first cell, where the identification information of the first cell indicates that the multi-carrier co-scheduling information for scheduling the resource of the second cell is sent in the first cell.

The network device sends, in the first cell, the multi-carrier co-scheduling information for scheduling the resource of the second cell. The terminal device detects, in the first cell, the multi-carrier co-scheduling information for scheduling the resource of the second cell.

In an implementation, the configuration information of the second cell may include both the first combination identification information and the identification information of the first cell.

After receiving the configuration information of the second cell, the terminal device determines, based on the first combination identification information in the configuration information of the second cell, the co-scheduled cell combination to which the second cell belongs. The terminal device determines, based on the identification information of the first cell in the configuration information of the second cell, that scheduling information of the co-scheduled cell combination is sent in the first cell. The terminal device detects the multi-carrier co-scheduling information on the resource of the first cell. If the terminal device obtains one piece of scheduling information through detection, and the scheduling information includes the first combination identification information, the terminal device determines that the resources of the co-scheduled cell combination identified by the first combination identification information are scheduled by using the scheduling information. If the terminal device obtains one piece of scheduling information through detection, and the scheduling information does not include the first combination identification information, the terminal device may determine that the resources of the co-scheduled cell combination identified by the first combination identification information are not scheduled by using the scheduling information. If the scheduling information includes second combination identification information, the terminal device may determine a co-scheduled cell combination identified by the second combination identification information, and resources of the co-scheduled cell combination are scheduled by using the scheduling information.

In an example, the configuration information of the serving cell may include the information A (denoted as MultiCarrierSchedulingConfig), where the information A is for configuring the multi-carrier co-scheduling manner, and the information A includes scheduling cell information (denoted as SchedulingCellinfo). The scheduling cell information indicates whether the serving cell carries the multi-carrier co-scheduling information, and the scheduling cell information indicates whether a resource of the serving cell is scheduled in the multi-carrier co-scheduling manner. The information A may be represented as follows.

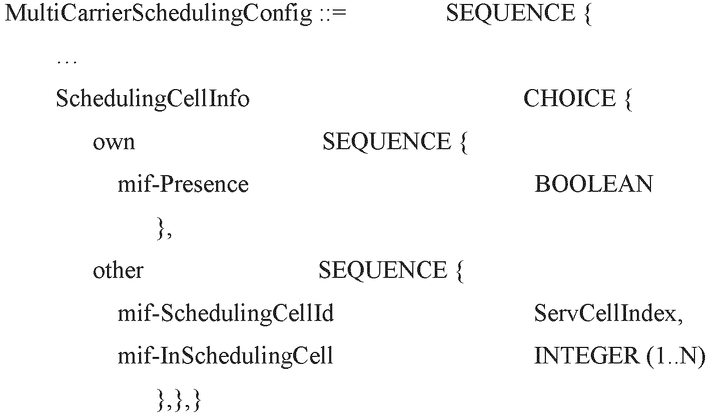

A configuration manner of the scheduling cell information SchedulingCellInfo is CHOICE, that is, a selection manner. CHOICE indicates that either "own" or "other" is selected, "own" indicates that the cell is a cell in which the multi-carrier co-scheduling information is sent, and "other" indicates that the resource of the cell can be scheduled in the multi-carrier scheduling manner.

For example, in the configuration information of the first cell, "own" is configured in SchedulingCellInfo. The terminal device determines, based on that "own" is configured in SchedulingCellInfo in the configuration information of the first cell, that the first cell is the cell in which the multi-carrier co-scheduling information is sent, so that the terminal device detects the multi-carrier co-scheduling information in the first cell. In the configuration information of the second cell, "other" is configured in SchedulingCellInfo. The terminal device determines, based on that "other" is configured in SchedulingCellInfo in the configuration information of the second cell, that the resource of the second cell can be scheduled in the multi-carrier scheduling manner.

Optionally, the "other" configuration information includes identification information of a cell in which the multi-carrier scheduling information for scheduling the resource of the cell is located and/or combination identification information of a co-scheduled cell combination to which the cell belongs.

For example, the "other" configuration information in the configuration information of the second cell includes mif-SchedulingCellId. mif-SchedulingCellId indicates identification information ServCellIndex of a cell. The terminal device may determine that the network device sends, in a cell corresponding to ServCellIndex (for example, the first cell), the multi-carrier co-scheduling information for scheduling the resource of the second cell.

For another example, the "other" configuration information in the configuration information of the second cell includes mif-InSchedulingCell. mif-InSchedulingCell indicates the combination identification information of the co-scheduled cell combination to which the second cell belongs, and the combination identification information may be an integer from 1 to N. For example, the combination identification information indicated by mif-InSchedulingCell is n, and 1≤n≤N. The terminal device may determine that the second cell belongs to a co-scheduled cell combination n. When the terminal device obtains, through detection, one piece of multi-carrier co-scheduling information indicating that combination identification information is n, the terminal device determines that the co-scheduled cell combination to which the second cell belongs is scheduled by using the scheduling information.

For another example, the "other" configuration information in the configuration information of the second cell includes mif-SchedulingCellId indicating the first cell and mif-InSchedulingCell indicating combination identification information n. In this case, the terminal device detects, in the first cell, multi-carrier co-scheduling information indicating that combination identification information is n.

Optionally, the "own" configuration information may include self-scheduling configuration information, denoted as mif-Presence. The self-scheduling configuration information is for configuring whether the multi-carrier co-scheduling information sent in the first cell is for scheduling the resource of the first cell.

For example, mif-Presence is the foregoing Boolean (BOOLEAN) configuration information. If mif-Presence indicates "true (true)", it indicates that the multi-carrier co-scheduling information sent in the first cell is for scheduling the resource of the first cell. The terminal device may determine, based on that the self-scheduling configuration information indicates "true", that all multi-carrier co-scheduling information detected in the first cell is for scheduling the resource of the first cell. If mif-Presence indicates "false (false)", it indicates that the multi-carrier co-scheduling information sent in the first cell is not for scheduling the resource of the first cell. All multi-carrier co-scheduling information detected by the terminal device in the first cell is not for scheduling the resource of the first cell.

In another example, the configuration information of the serving cell indicates whether the cell is the cell in which the multi-carrier co-scheduling information is sent, and indicates a cell in which the scheduling information is located and/or a co-scheduled cell combination to which the scheduling information belongs when the resource of the cell can be scheduled in the multi-carrier co-scheduling manner.

For example, the scheduling cell information SchedulingCellinfo in the foregoing example is not a selection-type configuration, for example, may be a sequence (SEQUENCE) type, where both "own" and "other" are optional (OPTIONAL) configurations. For example, the configuration information of the serving cell may include MultiCarrierSchedulingConfig (an example of the information A). For example, MultiCarrierSchedulingConfig may be represented as follows.

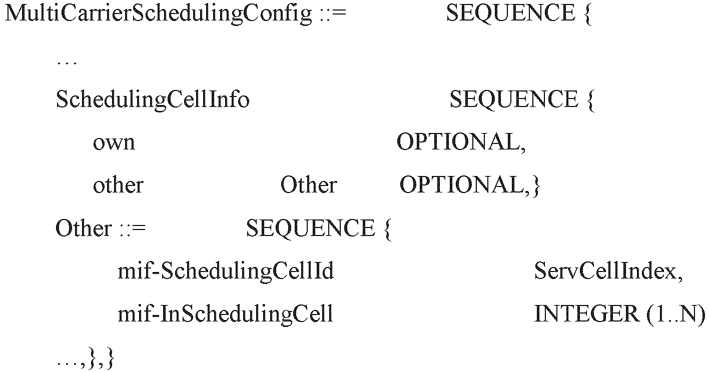

Both "own" and "other" are optional configurations. For example, the information Ain the configuration information of the first cell may include the "own" configuration information, indicating that the first cell is the cell in which the multi-carrier co-scheduling information is sent. The information A in the configuration information of the first cell may further include the "other" configuration information, indicating that the resource of the first cell can also be scheduled in the multi-carrier co-scheduling manner. The "other" configuration information may be for configuring, by using Other, identification information of the scheduling cell and/or a co-scheduled cell combination to which the first cell belongs. For example, the network device may indicate identification information ServCellIndex of one cell by using mif-SchedulingCellId. For example, ServCellIndex may identify the first cell. In this case, the terminal device may identify the first cell based on ServCellIndex, and determine that multi-carrier co-scheduling information for scheduling a resource including the resource of the first cell is sent in the first cell. Alternatively, ServCellIndex may identify the third cell, and the terminal device may determine that multi-carrier co-scheduling information for scheduling a resource including the resource of the first cell is sent in the third cell. The network device may indicate, by using mif-InSchedulingCell, combination identification information of the co-scheduled cell combination to which the first cell belongs, and the terminal device may determine, depending on whether the multi-carrier co-scheduling information indicates the combination identification information, whether the co-scheduled cell combination to which the first cell belongs is scheduled.

Optionally, one serving cell may belong to a plurality of co-scheduled cell combinations, configuration information of the serving cell may include a plurality of pieces of combination identification information, and the plurality of pieces of combination identification information identify the plurality of co-scheduled cell combinations to which the serving cell belongs.

If the second cell belongs to a plurality of co-scheduled cell combinations, the second configuration information (that is, the configuration information of the second cell) includes a plurality of pieces of combination identification information, and the plurality of pieces of combination identification information include the foregoing first combination identification information. For example, the network device configures four serving cells for the terminal device, for example, a first cell, a second cell, a third cell, and a fourth cell. The four serving cells form three co-scheduled cell combinations, and identification information of the three co-scheduled cell combinations is respectively 0, 1, and 2. A co-scheduled combination 0 and a co-scheduled combination 2 include the second cell. For example, the co-scheduled cell combination 0 includes the second cell and the third cell, and the co-scheduled cell combination 2 includes the first cell, the second cell, and the fourth cell. In this case, configuration information of the second cell includes two pieces of combination identification information: 0 and 2. Configuration information of the third cell includes the combination identification information 0, and configuration information of the first cell and configuration information of the fourth cell include the combination identification information 2. In addition, configuration information of a cell included in the co-scheduled cell combination 1 includes combination identification information 1. The terminal device determines, based on the identification information in configuration information of the four serving cells, a serving cell included in each of the three co-scheduled cell combinations.

The configuration information of the first cell may alternatively include at least one piece of combination identification information, and one of the at least one piece of combination identification information identifies one co-scheduled cell combination to which the first cell belongs. For details, refer to the implementations of the second cell, and the details are not described herein again.

In an implementation, the information A for configuring the multi-carrier co-scheduling may be added to configuration information of a current cell. Alternatively, in the multi-carrier scheduling manner, a resource of at least one cell is scheduled in a cross-carrier scheduling manner, to be specific, a resource carrying scheduling information and a resource scheduled by using the scheduling information do not belong to a same cell (in other words, do not belong to a same carrier), so that, it may be considered that the multi-carrier scheduling manner belongs to the cross-carrier scheduling manner. Therefore, cross-carrier scheduling information of the configuration information of the current cell may be reused to configure the multi-carrier scheduling manner, in other words, the cross-carrier scheduling information of the configuration information of the current cell may include the foregoing information A.

Implementation 1 is described above. The plurality pieces of configuration information sent by the network device are the configuration information of the plurality of cells, and the scheduling cell (to be specific, the cell in which the multi-carrier co-scheduling information is sent) and the scheduled cell (to be specific, the cell whose resource can be scheduled in the multi-carrier co-scheduling manner) that participate in the multi-carrier co-scheduling manner are configured by using the configuration information of the cell. Therefore, the terminal device can determine the scheduling cell and the scheduled cell based on the configuration information of the cell, detect the multi-carrier co-scheduling information in the scheduling cell, and determine the scheduled cell based on the configuration information of the cell and the detected multi-carrier co-scheduling information.

The following describes Implementation 2 provided in this embodiment of this application. The network device may configure, by using configuration information of the multi-carrier scheduling information, a cell in which the multi-carrier scheduling information is sent and a co-scheduled cell combination that can be scheduled by using the multi-carrier scheduling information.

Implementation 2: The network device sends first information to the terminal device, where the first information is for configuring first scheduling information, the first scheduling information is multi-carrier co-scheduling information, and the first information includes the first configuration information and the second configuration information.

The terminal device receives the first information for configuring the first scheduling information, and determines, based on the first configuration information in the first information, a cell in which the first scheduling information is sent. The terminal device may determine, based on the second configuration information in the first information, a plurality of cells whose resources can be scheduled by using the first scheduling information.

Optionally, the first configuration information includes identification information of one or more cells, the identification information of the one or more cells indicates one or more cells in which the first scheduling information is sent, and the one or more cells include the first cell.

For example, the first configuration information may configure one cell in which the first scheduling information is sent, for example, the first cell. The terminal device may determine, based on the first configuration information, to detect the first scheduling information on a resource of the first cell. For example, the terminal device detects, on a PDCCH of the first cell, whether the network device sends the first scheduling information.

For another example, the first configuration information may configure a plurality of cells in which the first scheduling information is sent, for example, the first cell and a third cell. In this case, the terminal device detects, on PDCCHs of the first cell and the third cell, whether the network device sends the first scheduling information. The network device sends the first scheduling information in one of the first cell and the third cell. For example, in one time of scheduling, the network device may determine a cell based on utilization of control channel resources in the first cell and the third cell. For example, the network device may determine the first cell having a relatively large quantity of available control channel resources, and send the first scheduling information in the first cell, where the first scheduling information indicates that resources of a plurality of cells are scheduled. In another time of scheduling, the network device may send the first scheduling information in the third cell, to notify the terminal device of resources of a plurality of scheduled cells.

Optionally, the second configuration information includes one or more pieces of combination identification information, and the one or more pieces of combination identification information are identification information of a plurality of candidate co-scheduled cell combinations in the first scheduling information. Each candidate co-scheduled cell combination includes a plurality of cells. The one or more pieces of combination identification information include first combination identification information, and a candidate co-scheduled cell combination identified by the first combination identification information includes the second cell.

In an example, the first scheduling information sent by the network device to the terminal device includes one piece of combination identification information in combination identification information configured in the second configuration information. After receiving the first scheduling information, the terminal device determines that a candidate co-scheduled cell combination identified by the combination identification information is scheduled by using the first scheduling information.

In another example, the second configuration information configures one piece of combination identification information, for example, the first combination identification information. The first information further includes identification information of the first scheduling information. The first scheduling information sent by the network device to the terminal device includes the identification information of the first scheduling information. After receiving one piece of scheduling information, the terminal device determines, based on identification information of first scheduling information included in the scheduling information, that the scheduling information is the first scheduling information, and determines, based on the second configuration information, that a candidate co-scheduled cell combination scheduled by using the first scheduling information is the candidate co-scheduled cell combination identified by the first combination identification information. In other words, the network device may send one or more pieces of configuration information of the multi-carrier co-scheduling information to the terminal device, where the one or more pieces of configuration information include the first information. One piece of configuration information is for configuring one piece of multi-carrier co-scheduling information, and identification information of the multi-carrier co-scheduling information and one candidate co-scheduled cell combination that can be scheduled by using the multi-carrier co-scheduling information are configured by using the configuration information. The terminal device determines, based on the identification information of multi-carrier co-scheduling information included in the received scheduling information and the configuration information of the multi-carrier co-scheduling information, the candidate co-scheduled cell combination scheduled by using the scheduling information. For example, the first scheduling information may be DCI, the first information may be denoted as SingleDCI, and SingleDCI is for configuring DCI of the multi-carrier co-scheduling manner, that is, the first scheduling information. SingleDCI may be represented as follows.

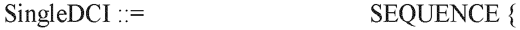

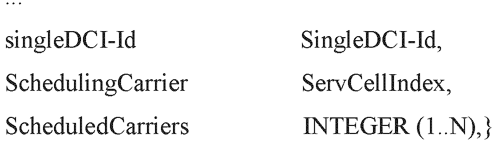

singleDCI-Id indicates the identification information SingleDCI-Id of the first scheduling information, and SchedulingCarrier is an example of the first configuration information. SchedulingCarrier indicates identification information ServCellIndex of one cell, which indicates that the cell identified by ServCellIndex is a cell in which the first scheduling information is sent. For example, the cell identified by ServCellIndex is the first cell. ScheduledCarriers is an example of the second configuration information, ScheduledCarriers indicates combination identification information of one candidate co-scheduled cell combination, and the combination identification information is an integer from 1 to N. For example, ScheduledCarriers indicates the first combination identification information. For example, the first combination identification information is n, and 1≤n≤N. One candidate co-scheduled cell combination identified by the first combination identification information includes the second cell. After receiving SingleDCI, the terminal device determines to detect the first scheduling information on the resource of the first cell. If the terminal device obtains one piece of scheduling information in the first cell through detection, and the scheduling information indicates that identification information of the scheduling information is SingleDCI-Id, the terminal device may determine that the scheduling information is the first scheduling information. Because the second configuration information in the configuration information of the first scheduling information includes the first combination identification information, the terminal device determines that the first scheduling information is for scheduling a resource of the candidate co-scheduled cell combination identified by the first combination identification information.

Optionally, in Implementation 2, the first scheduling information is uplink multi-carrier scheduling information, and the first information may be specifically configuration information of the uplink multi-carrier scheduling information. For example, the first scheduling information is uplink DCI for scheduling uplink resources of the plurality of cells. Alternatively, the first scheduling information is downlink multi-carrier scheduling information, and the first information may be specifically configuration information of the downlink multi-carrier scheduling information. For example, the first scheduling information is downlink DCI for scheduling downlink resources of the plurality of cells.

Implementation 3: The first configuration information is for configuring the scheduling information of the multi-carrier co-scheduling manner to be sent in the first cell. The second configuration information is for configuring at least one candidate co-scheduled cell combination corresponding to the scheduling information, and one or more candidate co-scheduled cell combinations in the at least one candidate co-scheduled cell combination include the second cell.

For example, the first configuration information may include identification information of the first cell. After receiving the first configuration information, the terminal device determines, based on the identification information of the first cell included in the first configuration information, to detect the multi-carrier co-scheduling information in the first cell. At least one candidate co-scheduled cell combination whose resources can be scheduled by using the multi-carrier co-scheduling information sent in the first cell and combination identification information of each candidate co-scheduled cell combination are configured by using the second configuration information. The multi-carrier co-scheduling information to be sent by the network device in the first cell may include combination identification information of one cell combination in the at least one candidate co-scheduled cell combination. The terminal device may determine, based on the combination identification information, a cell combination whose resource is scheduled.

In an example, an RRC message sent by the network device to the terminal device includes multi-carrier scheduling configuration information, for example, denoted as MultiCarrierSchedulingConfig. The multi-carrier scheduling configuration information includes the first configuration information and the second configuration information. The multi-carrier scheduling configuration information may be represented as follows.

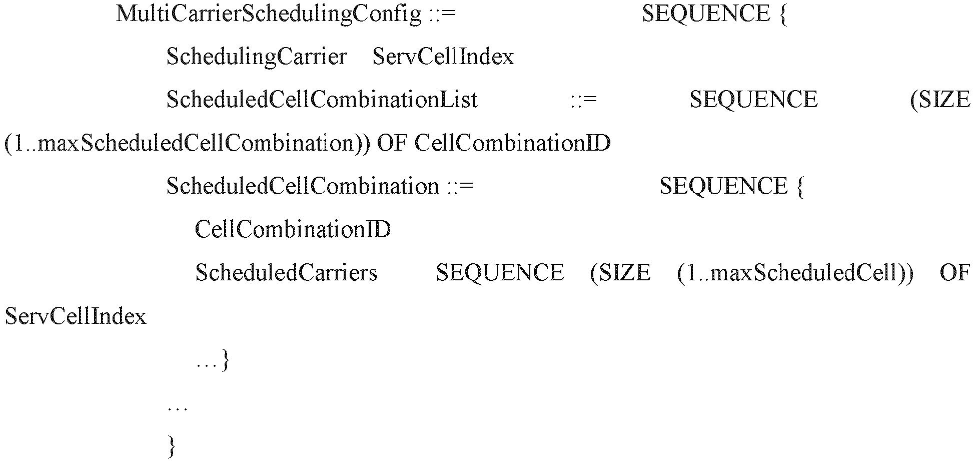

SchedulingCarrier is the first configuration information, and indicates identification information ServCellIndex of one cell. The terminal device may determine, based on SchedulingCarrier, that the network device sends the multi-carrier co-scheduling information in the cell corresponding to ServCellIndex (for example, the first cell). The second configuration information includes candidate co-scheduled cell combination list information (that is, the foregoing ScheduledCellCombinationList) and at least one piece of candidate co-scheduled cell combination configuration information (that is, the foregoing ScheduledCellCombination). One piece of candidate co-scheduled cell combination configuration information is for configuring one candidate co-scheduled cell combination. For example, ScheduledCellCombination is specifically for configuring combination identification information CellCombinationID of the candidate co-scheduled cell combination, and ScheduledCarriers is for configuring, by indicating identification information ServCellIndex of a cell, the cell included in the candidate co-scheduled cell combination. maxScheduledCellCombination indicates a maximum quantity of candidate scheduling cell combinations corresponding to one piece of multi-carrier co-scheduling information, and maxScheduledCell indicates a maximum quantity of cells that can be scheduled by one piece of multi-carrier co-scheduling information.

The foregoing describes specific implementations in which the network device notifies, by sending the configuration information, the terminal device of the cell in which the multi-carrier co-scheduling information is received and the resource of the cell that can be scheduled in the multi-carrier co-scheduling manner. That the network device may configure a co-scheduled cell combination for the terminal device based on capability information of the terminal device is described as follows.

Optionally, before the network device configures the multi-carrier co-scheduling manner for the terminal device, the terminal device sends second information to the network device, where the second information indicates at least one frequency band in which the terminal device supports the multi-carrier co-scheduling, and carriers of the first cell and the second cell are in the at least one frequency band.

The second information may be carried in the capability information of the terminal device sent by the terminal device to the network device. The terminal device notifies, by using the second information, the network device of the at least one frequency band in which the terminal device can support the multi-carrier co-scheduling. After receiving the second information, the network device may configure, for the terminal device in the at least one frequency band based on a capability of the terminal device, a cell participating in the multi-carrier co-scheduling.

For example, the second information indicates a frequency band, for example, a frequency band 1, in which the terminal device supports the multi-carrier co-scheduling. After receiving the second information, the network device may determine to determine the co-scheduled cell combination in the frequency band 1. For example, if the network device configures three serving cells, for example, a cell 1, a cell 2, and a cell 3, for the terminal device in the frequency band 1, the three serving cells may be co-scheduled by using one piece of scheduling information. The network device may determine the co-scheduled cell combination from the three serving cells. For example, one co-scheduled cell combination may include the cell 1, the cell 2, and the cell 3, or may include the cell 1 and the cell 2.

For another example, the second information indicates a plurality of frequency bands in which the terminal device supports the multi-carrier co-scheduling, for example, a frequency band 1 and a frequency band 2. After receiving the second information, the network device may determine to determine, in the frequency band 1 and the frequency band 2, a cell participating in the multi-carrier co-scheduling. For example, if the network device configures two serving cells, for example, a cell 1 and a cell 2, for the terminal device in the frequency band 1, and configures two serving cells, for example, a cell 3 and a cell 4, for the terminal device in the frequency band 2, the terminal device may determine the co-scheduled cell combination from the four serving cells. For example, one co-scheduled cell combination includes the cell 1, the cell 2, and the cell 3, includes the cell 1 and the cell 4, or includes the cell 3 and the cell 4.

By way of example, and not limitation, the second information is carried in an RRC message. For example, the second information may be denoted as multicarrierscheduling-bandList, and the second information may be represented as follows.

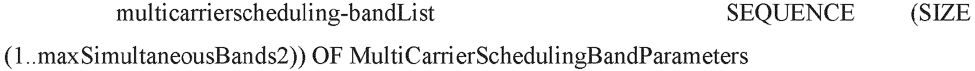

The second information includes at least one piece of frequency band information MultiCarrierSchedulingBandParameters, and each piece of frequency band information indicates one frequency band in which the terminal device supports the multi-carrier co-scheduling. maxSimultaneousBands2 is a maximum quantity M of frequency bands that can be reported by the terminal device and in which the terminal device supports the multi-carrier co-scheduling. The maximum quantity may be predefined. A quantity of the at least one frequency band indicated by the second information is less than or equal to M.

Optionally, the second information further indicates that each of the at least one frequency band supports uplink multi-carrier co-scheduling and/or downlink multi-carrier co-scheduling.

After receiving the second information, the network device determines the frequency band in which the terminal device supports the uplink multi-carrier co-scheduling and/or the frequency band in which the terminal device supports the downlink multi-carrier co-scheduling. If the network device configures the uplink multi-carrier co-scheduling for the terminal device, the network device determines an uplink co-scheduled cell combination in the frequency band in which the terminal device supports the uplink multi-carrier co-scheduling, and notifies the terminal device of the uplink co-scheduled cell combination. If the network device configures the downlink multi-carrier co-scheduling for the terminal device, the network device determines a downlink co-scheduled cell combination in the frequency band in which the terminal device supports the downlink multi-carrier co-scheduling, and notifies the terminal device of the downlink co-scheduled cell combination.

For example, the frequency band information corresponding to each frequency band may further indicate whether the frequency band supports the uplink multi-carrier co-scheduling and indicate whether the frequency band supports the downlink multi-carrier co-scheduling. The second information sent by the terminal device to the network device includes three pieces of frequency band information. The three pieces of frequency band information indicate three frequency bands in which the terminal device supports the multi-carrier co-scheduling. Each piece of frequency band information includes identification information of a corresponding frequency band. For example, the three frequency bands are a frequency band 1, a frequency band 2, and a frequency band 3. Frequency band information of the frequency band 1 indicates that the frequency band 1 supports the downlink multi-carrier scheduling, frequency band information of the frequency band 2 indicates that the frequency band 2 supports both the downlink multi-carrier scheduling and the uplink multi-carrier scheduling, and frequency band information of the frequency band 3 indicates that the frequency band 3 supports the uplink multi-carrier scheduling. After receiving the second information, the network device may determine that the terminal device supports the downlink multi-carrier scheduling in the frequency band 1 and the frequency band 2, and the network device may determine the uplink co-scheduled cell combination of the terminal device in the frequency band 1 and the frequency band 2. The network device may determine that the terminal device supports the uplink multi-carrier scheduling in the frequency band 2 and the frequency band 3, and the network device may determine the downlink co-scheduled cell combination of the terminal device in the frequency band 2 and the frequency band 3.

For example, the frequency band information may be represented as follows.

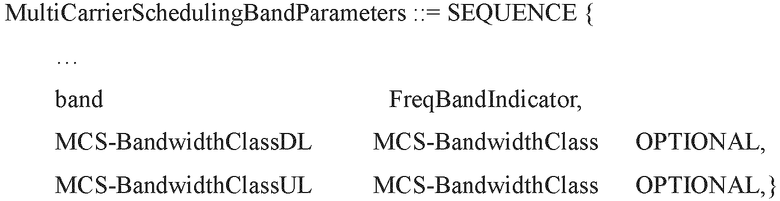

The frequency band information includes frequency band indication information indicating identification information FreqBandIndicator of the frequency band in which the terminal device supports the multi-carrier scheduling, and the frequency band information may include optional configurations MCS-BandwidthClassDL and/or MCS-BandwidthClassUL. If the frequency band information includes MCS-BandwidthClassDL, it indicates that the frequency band identified by FreqBandIndicator supports the downlink multi-carrier scheduling. If the frequency band information does not include MCS-BandwidthClassDL, it indicates that the frequency band does not support the downlink multi-carrier scheduling. Similarly, the terminal device may determine, depending on whether the frequency band information includes MCS-BandwidthClassUL, whether the frequency band supports the uplink multi-carrier scheduling.

S502: The network device sends the first scheduling information to the terminal device in the first cell, where the first scheduling information is for scheduling the resources of the plurality of cells, and the plurality of cells include the second cell or include the first cell and the second cell.

Correspondingly, the terminal device receives, the first scheduling information from the network device in the first cell.

For example, the first scheduling information includes the first combination identification information, the terminal device may determine that the plurality of cells in the co-scheduled cell combination identified by the first combination identification information are scheduled by using the first scheduling information, and the co-scheduled cell combination includes the second cell. In this case, the second cell is scheduled. If the co-scheduled cell combination further includes the first cell, the first cell and the second cell are scheduled.

Optionally, the network device further sends second scheduling information to the terminal device, where the second scheduling information is for scheduling a resource of at least one cell. The first scheduling information is uplink scheduling information, and the second scheduling information is downlink scheduling information. Alternatively, the first scheduling information is downlink scheduling information, and the second scheduling information is uplink scheduling information.

In an implementation, the network device sends the second scheduling information to the terminal device in the first cell.

The network device may configure uplink multi-carrier co-scheduling information and downlink multi-carrier co-scheduling information to be sent in a same cell, so that the terminal device needs to detect the scheduling information of the multi-carrier co-scheduling manner in only one cell. This avoids detecting the multi-carrier co-scheduling information on the resources of the plurality of cells, and can reduce power consumption of detecting the scheduling information by the terminal device.

Optionally, an information length of the first scheduling information is equal to an information length of the second scheduling information. The first scheduling information and the second scheduling information include a format indication field, where the format indication field indicates that the scheduling information is the uplink multi-carrier co-scheduling information or the downlink multi-carrier co-scheduling information.

A length of the uplink multi-carrier co-scheduling information is equal to a length of the downlink multi-carrier co-scheduling information, so that an increase in a type of a length of scheduling information blindly detected by the terminal device can be avoided, and a quantity of times for which the terminal device performs blind detection can be reduced. Therefore, the power consumption of the terminal device is reduced.

For example, scheduling information with a relatively short valid indication field in the uplink multi-carrier scheduling information and the downlink multi-carrier scheduling information is determined, and bit padding is performed on the scheduling information with a relatively short valid indication field, so that the length of the uplink multi-carrier scheduling information is equal to the length of the downlink multi-carrier scheduling information. The valid indication field is indication information indicating a scheduling parameter. For example, a total length of a valid indication field included in the uplink multi-carrier scheduling information is X, and a total length of a valid indication field included in the downlink multi-carrier scheduling information is Y. If X<Y, Y-X bits set to 0 are included after the valid indication field in the uplink multi-carrier scheduling information. If X>Y, X-Y padding bits are included after the valid indication field in the uplink multi-carrier scheduling information. Therefore, the length of the uplink multi-carrier scheduling information is equal to the length of the downlink multi-carrier scheduling information. The network device and the terminal device can reach a consensus on a length of the padding bits. The terminal device does not read the padding bit, or the terminal device may check, by using the padding bit, whether the scheduling information is correctly received. For example, the network device and the terminal device consider by default that the padding bits are to 0, and the terminal device may determine, depending on whether the padding bits are all 0, whether the scheduling information is correctly received. However, this application is not limited thereto.

In another implementation, the network device sends the second scheduling information in the third cell. The third cell is a cell other than the plurality of cells scheduled by using the first scheduling information.

For example, the network device configures four serving cells for the terminal device: a cell 1, a cell 2, a cell 3, and a cell 4. The cell 1 and the cell 2 include both an uplink carrier and a downlink carrier, and the cell 3 and the cell 4 include only a downlink carrier. The network device may configure, for the terminal device, the downlink multi-carrier co-scheduling information to be sent in the cell 1 (an example of the first cell) and the uplink multi-carrier co-scheduling information to be sent in the cell 4 (an example of the third cell). The downlink multi-carrier scheduling information is for scheduling resources of a co-scheduled cell combination including the cell 1, the cell 2, and the cell 3, and the uplink multi-carrier co-scheduling information is for scheduling resources of a co-scheduled cell combination including the cell 1 and the cell 2.

To improve resource utilization of a control resource, it may be stipulated that a resource of a cell other than a primary cell cannot carry scheduling information for scheduling a resource of another cell in the cross-carrier manner, and be scheduled by using scheduling information on another carrier at the same time, where the control resource is for carrying the scheduling information. Therefore, it may be stipulated that at least one of the uplink multi-carrier scheduling information and the downlink multi-carrier scheduling information is not sent in a cell belonging to the co-scheduled cell combination. For example, the first cell may be a primary cell, and the third cell does not belong to the co-scheduled cell combination.

Optionally, the first information includes third configuration information. The third configuration information is for configuring an indication field included in the first scheduling information.

The third configuration information configures that the first scheduling information includes one first indication field, and the one first indication field is applicable to resources that are of the plurality of cells and that are multi-carrier co-scheduled. Alternatively, the third configuration information indicates that the first scheduling information includes a plurality of first indication fields, and the plurality of first indication fields are respectively applicable to the plurality of cells that are multi-carrier co-scheduled.

The third configuration information may be referred to as indication field configuration information. The third configuration information may configure that one or more indication fields in the first scheduling information are applicable to being shared by or being independent for multi-carrier co-scheduling resources of the plurality of cells scheduled by using the first scheduling information. If the third configuration information indicates that an indication field 1 (an example of the first indication field) is shared by the multi-carrier co-scheduling resources of the plurality of cells, the first scheduling information includes one indication field 1, and content indicated by the indication field 1 is applicable to the multi-carrier co-scheduling resources of the plurality of cells. If the third configuration information indicates that an indication field 2 is independent for the multi-carrier co-scheduling resources of the plurality of cells, the first scheduling information includes one indication field 2 corresponding to each of the plurality of cells, and one indication field 2 is only applicable to a corresponding cell.

For example, the third configuration information may be denoted as SingleDCIFieldConfig, and SingleDCIFieldConfig may be represented as follows.

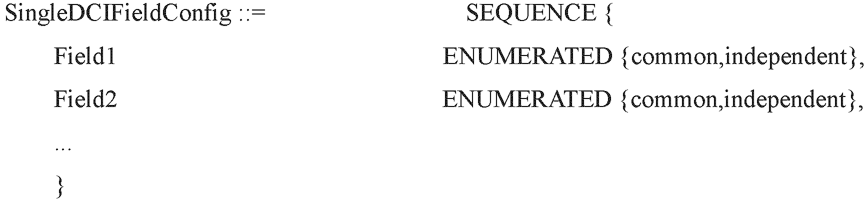

As described above, in the third configuration information, an indication field is configured as an enumerated (ENUMERATED) type of configuration information, and the network device may indicate one of two optional states: common (common) and independent (independent). For example, Field1 is a time domain resource allocation field, and the time domain resource allocation field indicates a scheduled time domain resource. An enumerated state of Field1 in SingleDCIFieldConfig sent by the network device is common, in other words, shared. Field2 may be a modulation and coding scheme (modulation and coding scheme, MCS) indication field, and the MCS indication field indicates a modulation order and a channel encoding code rate. An enumerated state of Field2 in SingleDCIFieldConfig sent by the network device is independent, in other words, dedicated. The terminal device determines, based on the configuration information, that the first scheduling information includes one time domain resource allocation field and a plurality of MCS indication fields. For an indication field in the independent state, a quantity of indication fields included in the first scheduling information, for example, a quantity of MCS indication fields, may be determined based on a maximum quantity of a plurality of cells that can be scheduled by using the first scheduling information configured by the network device. For example, if a maximum quantity of cells included in a co-scheduled cell combination that can be scheduled by using the first scheduling information configured by the network device is N, the terminal device determines that the first scheduling information includes N MSC indication fields. After receiving the first scheduling information, the terminal device may determine, based on one time domain resource allocation field in the first scheduling information, that all time resources in the resources of the plurality of cells scheduled by using the first scheduling information are time resources indicated by the time domain resource allocation field. In addition, the first scheduling information includes the N MCS indication fields, and the terminal device determines, based on each MCS indication field, an MCS used for data transmitted on a resource of a cell corresponding to each MCS indication field. The first indication field may include but is not limited to one or more of the following indication fields:
the MCS indication field, indicating a modulation order and a channel encoding code rate that are used for scheduled data;
the time domain resource allocation field, indicating a time domain position of a scheduled transmission resource;
a frequency domain resource allocation field, indicating a frequency domain position of the scheduled transmission resource;
an antenna port indication field, indicating a scheduled antenna port;
a sounding reference signal (sounding reference signal, SRS) resource indication field, indicating a resource carrying an SRS;
a precoding information and transmission layer quantity indication field indicates precoding information used for data transmission and a transmission layer quantity for the data transmission; and
an uplink (uplink, UL)/supplementary uplink (supplementary UL, SUL) indication field, indicating that a resource of a scheduled cell is an uplink resource or a supplementary uplink resource.

According to the foregoing solutions, when the resources of the plurality of cells are scheduled in the multi-carrier scheduling manner, the network device may configure that an indication field in the scheduling information is common or independent. Same scheduling information for the plurality of cells is indicated by using one indication field, so that information overheads of the scheduling information can be reduced, and the resource utilization can be improved.

The terminal device may send third information to the network device. The third information indicates whether the terminal device supports detecting both the multi-carrier scheduling information and third scheduling information in a same cell. The third scheduling information is single-carrier scheduling information for performing resource scheduling in the cross-carrier scheduling manner, and the third scheduling information is for scheduling a resource of a cell other than a cell in which the third scheduling information is located. In other words, a resource carrying the third scheduling information and the resource scheduled by using the third scheduling information do not belong to a same cell.

For example, the third scheduling information may be DCI in one or more formats of a DCI format 1_1, a DCI format 0_1, a DCI format 0_2, or a DCI format 1_2.

If the third information indicates that the terminal device does not support detecting both the multi-carrier scheduling information and the third scheduling information in a same cell, the network device can only configure the terminal device to detect one of the multi-carrier scheduling information or the third scheduling information in one cell. If the third information indicates that the terminal device supports detecting both the multi-carrier scheduling information and the third scheduling information in a same cell, the network device may configure the terminal device to detect one or more of the multi-carrier scheduling information and the third scheduling information in one cell.

The terminal device may send fourth information to the network device. The fourth information indicates a capability of detecting the fourth scheduling information when the terminal device supports detecting the multi-carrier scheduling information. The fourth scheduling information is single-carrier scheduling information for performing resource scheduling in a self-carrier scheduling manner, and the fourth scheduling information is for scheduling a resource of a cell in which the fourth scheduling information is located. In other words, a resource carrying the fourth scheduling information and the resource scheduled by using the fourth scheduling information belong to a same cell.

It may be stipulated in a protocol that, if the terminal device supports detecting the multi-carrier scheduling information, the terminal device supports detecting both the multi-carrier scheduling information and fourth scheduling information in a fallback (fallback) format in a same cell, and the terminal device notifies, by using the fourth information, the network device whether the terminal device further supports detecting fourth scheduling information in a non-fallback format in the cell in which the multi-carrier scheduling information is detected. It indicates that the terminal device can detect both the multi-carrier scheduling information and the fourth scheduling information in the fallback format in a same cell, and further supports detecting the fourth scheduling information in the non-fallback format in the cell. The network device may configure, in the cell in which the terminal device detects the multi-carrier scheduling information, the terminal device to detect the fourth scheduling information in the non-fallback format in the cell.

For example, the fourth scheduling information in the fallback format may be DCI in a DCI format 0_0 and/or DCI in a DCI format 1_0, and the fourth scheduling information in the non-fallback format may be DCI in one or more formats of a DCI format 1_1, a DCI format 0_1, a DCI format 0_2, or a DCI format 1_2.

In an implementation, the fourth information indicates that the terminal device supports or does not support detecting the fourth scheduling information in the non-fallback format in the cell in which the multi-carrier scheduling information is detected. For example, the fourth information may include one bit. The one bit being "1" indicates supporting, and the one bit being "0" indicates not supporting, and vice versa.

In another implementation, the fourth information indicates one or more non-fallback formats of the fourth scheduling information. The one or more non-fallback formats are non-fallback formats of the fourth scheduling information that can be detected by the terminal device in the cell in which the multi-carrier scheduling information is detected. For example, the fourth information may include an identifier of the non-fallback format of the fourth scheduling information supported by the terminal device. The network device may configure, based on the fourth information in the cell in which the terminal device detects the multi-carrier scheduling information, the terminal device to detect, in the cell, the fourth scheduling information in the non-fallback format supported by the terminal device.

In another implementation, when the fourth information indicates that the terminal device supports detecting the fourth scheduling information in the non-fallback format in the cell in which the multi-carrier scheduling information is detected, the fourth information further indicates that the terminal device supports one or more non-fallback formats of the detected fourth scheduling information.

A payload of the fourth scheduling information in the fallback format is lighter than that of the scheduling information in the non-fallback format, and the terminal device supports detecting at least the multi-carrier scheduling information and the fourth scheduling information in the fallback format in a same cell, so that when communication quality is poor, a communication connection between the terminal device and the network device can be maintained by using the fourth scheduling information in the fallback format, to implement link failure recovery, RRC reconfiguration, and the like.

According to the foregoing solutions, the terminal device may notify the network device of a capability of the terminal device to detect the scheduling information, so that the network device can configure, based on the capability of the terminal device, the terminal device to detect the scheduling information supported by the terminal device.

The resource scheduling method provided in this application is described above in detail with reference to the accompanying drawings. The following accompanying drawings describe a communication apparatus and a communication device provided this application. To implement functions in the methods provided in this application, network elements may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 6 is a block diagram of a communication apparatus according to this application. As shown in FIG. 6, a communication apparatus 600 may include a transceiver unit 620.

In a possible design, the communication apparatus 600 may correspond to the terminal device (for example, the first terminal device and/or the second terminal device) in the foregoing methods, a chip disposed in (or used in) the terminal device, or another apparatus, module, circuit, unit, or the like that can implement the methods of the terminal device.

It should be understood that the communication apparatus 600 may include units configured to perform the methods performed by the terminal device in the methods shown in FIG. 5. In addition, the units in the communication apparatus 600 and the foregoing other operations and/or functions are respectively used to implement corresponding procedures of the methods shown in FIG. 5.

Optionally, the communication apparatus 600 may further include a processing unit 610. The processing unit 610 may be configured to process instructions or data, to implement a corresponding operation.

It should be further understood that when the communication apparatus 600 is the chip disposed in (or used in) the terminal device, the transceiver unit 620 in the communication apparatus 600 may be an input/output interface or a circuit of the chip, and the processing unit 610 in the communication apparatus 600 may be a processor in the chip.

Optionally, the communication apparatus 600 may further include a storage unit 630. The storage unit 630 may be configured to store instructions or data, and the processing unit 610 may execute the instructions or the data stored in the storage unit, to enable the communication apparatus to implement a corresponding operation.

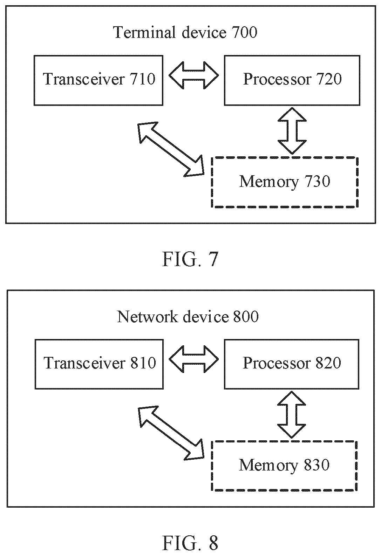

It should be understood that the transceiver unit 620 in the communication apparatus 600 may be implemented by using a communication interface (for example, a transceiver or an input/output interface), for example, may correspond to a transceiver 710 in a terminal device 700 shown in FIG. 7. The processing unit 610 in the communication apparatus 600 may be implemented by using at least one processor, for example, may correspond to a processor 720 in the terminal device 700 shown in FIG. 7. The processing unit 610 in the communication apparatus 600 may be further implemented by using at least one logic circuit. The storage unit 630 in the communication apparatus 600 may correspond to a memory in the terminal device 700 shown in FIG. 7.

It should be further understood that a specific process in which each unit performs the foregoing corresponding steps has been described in detail in the foregoing methods. For brevity, details are not described herein again.

In another possible design, the communication apparatus 600 may correspond to the network device in the foregoing methods, for example, a chip disposed in (or used in) the network device, or another apparatus, module, circuit, or unit that can implement the methods of the network device.

It should be understood that the communication apparatus 600 may include units configured to perform the methods performed by the network device in the methods shown in FIG. 5. In addition, the units in the communication apparatus 600 and the foregoing other operations and/or functions are respectively used to implement corresponding procedures of the methods shown in FIG. 5.

Optionally, the communication apparatus 600 may further include a processing unit 610. The processing unit 610 may be configured to process instructions or data, to implement a corresponding operation.

It should be further understood that when the communication apparatus 600 is the chip disposed in (or used in) the network device, the transceiver unit 620 in the communication apparatus 600 may be an input/output interface or a circuit of the chip, and the processing unit 610 in the communication apparatus 600 may be a processor in the chip.

Optionally, the communication apparatus 600 may further include a storage unit 630. The storage unit 630 may be configured to store instructions or data, and the processing unit 610 may execute the instructions or the data stored in the storage unit, to enable the communication apparatus to implement a corresponding operation.

It should be understood that when the communication apparatus 600 is the network device, the transceiver unit 620 in the communication apparatus 600 may be implemented by using a communication interface (for example, a transceiver or an input/output interface), for example, may correspond to a transceiver 810 in a network device 800 shown in FIG. 8. The processing unit 610 in the communication apparatus 600 may be implemented by using at least one processor, for example, may correspond to a processor 820 in the network device 800 shown in FIG. 8. The processing unit 610 in the communication apparatus 600 may be implemented by using at least one logic circuit. The storage unit 630 in the communication apparatus 600 may correspond to a memory in the network device 800 shown in FIG. 8.

It should be further understood that a specific process in which each unit performs the foregoing corresponding steps has been described in detail in the foregoing methods. For brevity, details are not described herein again.

FIG. 7 is a diagram of a structure of a terminal device 700 according to this application. The terminal device 700 may be used in the system shown in FIG. 1, and performs functions of the terminal device in the foregoing methods. As shown in the figure, the terminal device 700 includes a processor 720 and a transceiver 710. Optionally, the terminal device 700 further includes a memory 730. The processor 720, the transceiver 710, and the memory 730 may communication with each other by using an internal connection path, to transfer a control signal and/or a data signal. The memory 730 is configured to store a computer program, and the processor 720 is configured to execute the computer program in the memory 730, to control the transceiver 710 to receive and send a signal.

The processor 720 may be configured to perform an action that is described in the foregoing methods and that is implemented inside the terminal device, and the transceiver 710 may be configured to perform an action that is described in the foregoing methods and that is of sending to a network device or receiving from the network device by the terminal device. For details, refer to the descriptions in the foregoing methods. Details are not described herein again.

Optionally, the terminal device 700 may further include a power supply, configured to supply power to various components or circuits in the terminal device.

FIG. 8 is a diagram of a structure of a network device 800 according to this application. The network device 800 may be used in the system shown in FIG. 1, and performs functions of the network device in the foregoing methods. As shown in the figure, the network device 800 includes a processor 820 and a transceiver 810. Optionally, the network device 800 further includes a memory. The processor 820, the transceiver 810, and the memory 830 may communication with each other by using an internal connection path, to transfer a control signal and/or a data signal. The memory 830 is configured to store a computer program, and the processor 820 is configured to execute the computer program in the memory 830, to control the transceiver 810 to receive and send a signal.

The processor 820 may be configured to perform an action that is described in the foregoing methods and that is implemented inside the network device, and the transceiver 810 may be configured to perform an action that is described in the foregoing methods and that is of sending to a network device or receiving from the network device by the network device. For details, refer to the descriptions in the foregoing methods. Details are not described herein again.

Optionally, the network device 800 may further include a power supply, configured to supply power to various components or circuits in the network device.

In the terminal device shown in FIG. 7 and the network device shown in FIG. 8, the processor and the memory may be combined into one processing apparatus, and the processor is configured to execute program code stored in the memory to implement the foregoing functions. During specific implementation, the memory may alternatively be integrated into the processor, or may be independent of the processor. The processor may correspond to the processing unit in FIG. 6. The transceiver may correspond to the transceiver unit in FIG. 6. The transceiver 710 may include a receiver (or referred to as a receiver machine or a receiver circuit) and a transmitter (or referred to as a transmitter machine or a transmitter circuit). The receiver is configured to receive a signal, and the transmitter is configured to transmit a signal.

In this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in this application. The general-purpose processor may be a microprocessor, any conventional processor, or the like. The steps of the methods with reference to this application may be directly performed and completed by a hardware processor, or may be performed and completed by a combination of hardware and software modules in the processor.

In this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction structure or a data structure and that can be accessed by a computer, but is not limited thereto. The memory in this application may alternatively be a circuit or any other apparatus that can implement a storage function, and is configured to store program instructions and/or data.

This application further provides a processing apparatus, including a processor and a (communication) interface. The processor is configured to perform the method in any one of the foregoing methods.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

According to the methods provided in this application, this application further provides a computer program product. The computer program product includes computer program code, and when the computer program code is executed by one or more processors, an apparatus including the processor is enabled to perform the methods shown in FIG. 5.

All or some of the technical solutions in this application may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a computer, all or some of the procedures or functions according to this application are generated. The foregoing computer instructions may be stored in a computer-readable storage medium, or may be transmitted from a computer-readable storage medium to another computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the methods provided in this application, this application further provides a computer-readable storage medium. The computer-readable storage medium stores program code, and when the program code is run by one or more processors, an apparatus including the processor is enabled to perform the methods shown in FIG. 5.

According to the methods provided in this application, this application further provides a system, including the foregoing apparatus configured to implement the methods of the terminal device and the foregoing at least one apparatus configured to implement the methods of the network device.

In several embodiments provided in this application, it should be understood that the disclosed systems, apparatuses, and methods may be implemented in another manner. For example, the described apparatuses are merely examples. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource scheduling method, comprising:
sending a plurality of pieces of configuration information to a terminal device, wherein the plurality of pieces of configuration information comprise first configuration information and second configuration information, the first configuration information is for configuring scheduling information of a multi-carrier co-scheduling manner to be sent in a first cell, and the second configuration information is for configuring a resource of a second cell to be scheduled in the multi-carrier co-scheduling manner; and
sending first scheduling information to the terminal device in the first cell, wherein the first scheduling information is for scheduling resources of a plurality of cells, and the plurality of cells comprise the second cell or comprise the first cell and the second cell.

2. The method according to claim 1, wherein the second configuration information comprises first combination identification information, the first combination identification information identifies a co-scheduled cell combination comprising the plurality of cells, and the first scheduling information comprises the first combination identification information.

3. The method according to claim 2, wherein the second configuration information is configuration information of the second cell, the second configuration information comprises one or more pieces of combination identification information, the one or more pieces of combination identification information are identification information of a plurality of co-scheduled cell combinations to which the second cell belongs, and the one or more pieces of combination identification information comprise the first combination identification information.

4. The method according to claim 2 or 3, wherein the second configuration information is the configuration information of the second cell, and the second configuration information comprises identification information of the first cell in which the first scheduling information is located.

5. The method according to any one of claims 2 to 4, wherein the first configuration information is configuration information of the first cell, the first configuration information comprises at least one piece of combination identification information, and the at least one piece of combination identification information is identification information of at least one co-scheduled cell combination to which the first cell belongs.

6. The method according to claim 5, wherein the at least one piece of combination identification information comprises the first combination identification information.

7. The method according to any one of claims 1 to 6, wherein the method further comprises:
sending first information to the terminal device, wherein the first information is for configuring the first scheduling information.

8. The method according to claim 2, wherein the sending a plurality of pieces of configuration information to a terminal device comprises:
sending first information to the terminal device, wherein the first information is for configuring the first scheduling information, and the first information comprises the plurality of pieces of configuration information.

9. The method according to claim 8, wherein the second configuration information comprises one or more pieces of combination identification information, the one or more pieces of combination identification information are identification information of a plurality of candidate co-scheduled cell combinations in the first scheduling information, and the one or more pieces of combination identification information comprise the first combination identification information.

10. The method according to any one of claims 7 to 9, wherein the first information comprises third configuration information, and the third configuration information is for configuring an indication field comprised in the first scheduling information, wherein
the third configuration information configures that the first scheduling information comprises one first indication field, and the one first indication field is applicable to resources that are of the plurality of cells and that are multi-carrier co-scheduled; or
the third configuration information configures that the first scheduling information comprises a plurality of first indication fields, and the plurality of first indication fields are respectively applicable to the plurality of cells that are multi-carrier co-scheduled.

11. The method according to any one of claims 1 to 10, wherein the method further comprises:
receiving second information from the terminal device, wherein the second information indicates at least one frequency band in which the terminal device supports multi-carrier co-scheduling, and carriers of the plurality of cells belong to the at least one frequency band.

12. The method according to claim 11, wherein the second information further indicates that each of the at least one frequency band correspondingly supports uplink multi-carrier co-scheduling and/or supports downlink multi-carrier co-scheduling.

13. The method according to any one of claims 1 to 12, wherein the method further comprises:
sending second scheduling information to the terminal device in the first cell, wherein the second scheduling information is for scheduling a resource of at least one cell, wherein the first scheduling information is uplink scheduling information, and the second scheduling information is downlink scheduling information; or the first scheduling information is downlink scheduling information, and the second scheduling information is uplink scheduling information, wherein
an information length of the first scheduling information is equal to an information length of the second scheduling information.

14. The method according to any one of claims 1 to 12, wherein the method further comprises:
sending second scheduling information to the terminal device in a third cell, wherein the second scheduling information is for scheduling a resource of at least one cell, wherein the first scheduling information is uplink scheduling information, and the second scheduling information is downlink scheduling information; or the first scheduling information is downlink scheduling information, and the second scheduling information is uplink scheduling information, wherein
the third cell is a cell other than the plurality of cells.

15. A resource scheduling method, comprising:
receiving a plurality of pieces of configuration information from a network device, wherein the plurality of pieces of configuration information comprise first configuration information and second configuration information, the first configuration information is for configuring scheduling information of a multi-carrier co-scheduling manner to be sent in a first cell, and the second configuration information is for configuring a resource of a second cell to be scheduled in the multi-carrier co-scheduling manner; and
receiving first scheduling information from the network device in the first cell, wherein the first scheduling information is for scheduling resources of a plurality of cells, and the plurality of cells comprise the second cell or comprise the first cell and the second cell.

16. The method according to claim 15, wherein the second configuration information comprises first combination identification information, the first combination identification information identifies a co-scheduled cell combination comprising the plurality of cells, and the first scheduling information comprises the first combination identification information.

17. The method according to claim 16, wherein the second configuration information is configuration information of the second cell, the second configuration information comprises one or more pieces of combination identification information, the one or more pieces of combination identification information are identification information of a plurality of co-scheduled cell combinations to which the second cell belongs, and the one or more pieces of combination identification information comprise the first combination identification information.

18. The method according to claim 16 or 17, wherein the second configuration information is the configuration information of the second cell, and the second configuration information comprises identification information of the first cell in which the first scheduling information is located.

19. The method according to any one of claims 16 to 18, wherein the first configuration information is configuration information of the first cell, the first configuration information comprises at least one piece of combination identification information, and the at least one piece of combination identification information is identification information of at least one co-scheduled cell combination to which the first cell belongs.

20. The method according to claim 19, wherein the at least one piece of combination identification information comprises the first combination identification information.

21. The method according to any one of claims 15 to 20, wherein the method further comprises:
receiving first information from the network device, wherein the first information is for configuring the first scheduling information.

22. The method according to claim 16, wherein the receiving a plurality of pieces of configuration information from a network device comprises:
receiving first information from the network device, wherein the first information is for configuring the first scheduling information, and the first information comprises the plurality of pieces of configuration information.

23. The method according to claim 22, wherein the second configuration information comprises one or more pieces of combination identification information, the one or more pieces of combination identification information are identification information of a plurality of candidate co-scheduled cell combinations in the first scheduling information, and the one or more pieces of combination identification information comprise the first combination identification information.

24. The method according to any one of claims 21 to 23, wherein the first information comprises third configuration information, and the third configuration information is for configuring an indication field comprised in the first scheduling information, wherein
the third configuration information configures that the first scheduling information comprises one first indication field, and the one first indication field is applicable to resources that are of the plurality of cells and that are multi-carrier co-scheduled; or
the third configuration information configures that the first scheduling information comprises a plurality of first indication fields, and the plurality of first indication fields are respectively applicable to the plurality of cells that are multi-carrier co-scheduled.

25. The method according to any one of claims 15 to 24, wherein the method further comprises:
sending second information to the network device, wherein the second information indicates at least one frequency band in which a terminal device supports multi-carrier co-scheduling, and carriers of the plurality of cells belong to the at least one frequency band.

26. The method according to claim 25, wherein the second information further indicates that each of the at least one frequency band correspondingly supports uplink multi-carrier co-scheduling and/or supports downlink multi-carrier co-scheduling.

27. The method according to any one of claims 15 to 26, wherein the method further comprises:
receiving second scheduling information from the network device in the first cell, wherein the second scheduling information is for scheduling a resource of at least one cell, wherein the first scheduling information is downlink scheduling information, and the second scheduling information is downlink scheduling information; or the first scheduling information is downlink scheduling information, and the second scheduling information is uplink scheduling information, wherein
an information length of the first scheduling information is equal to an information length of the second scheduling information.

28. The method according to any one of claims 15 to 26, wherein the method further comprises:
receiving second scheduling information from the network device in a third cell, wherein the second scheduling information is for scheduling a resource of at least one cell, wherein the first scheduling information is uplink scheduling information, and the second scheduling information is downlink scheduling information; or the first scheduling information is downlink scheduling information, and the second scheduling information is uplink scheduling information, wherein
the third cell is a cell other than the plurality of cells.

29. A communication apparatus, comprising:
a unit or module configured to perform the method according to any one of claims 1 to 14; or
a unit or module configured to perform the method according to any one of claims 15 to 28.

30. A communication apparatus, comprising a processor and a memory, wherein the memory is coupled to the processor, and the processor is configured to perform the method according to any one of claims 1 to 14 or the method according to any one of claims 15 to 28.

31. A computer-readable storage medium, storing instructions, wherein when the instructions are run on a computer, the computer is enabled to perform the method according to any one of claims 1 to 14 or the method according to any one of claims 15 to 28.

32. A computer program product, comprising instructions, wherein when the instructions are run on a computer, the computer is enabled to perform the method according to any one of claims 1 to 14 or the method according to any one of claims 15 to 28.
